(19) Europäisches Patentamt / European Patent Office / Office européen des brevets

(11) **EP 4 615 014 A1**

(12) **EUROPEAN PATENT APPLICATION**
published in accordance with Art. 153(4) EPC

(43) Date of publication:
**10.09.2025 Bulletin 2025/37**

(21) Application number: **23893772.6**

(22) Date of filing: **20.11.2023**

(51) International Patent Classification (IPC):
***H04W 4/029*** (2018.01)

(52) Cooperative Patent Classification (CPC):
**H04W 4/02; H04W 4/029; H04W 24/08**

(86) International application number:
**PCT/CN2023/132581**

(87) International publication number:
**WO 2024/109682 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.11.2022 CN 202211462933**

(71) Applicant: **Huawei Technologies Co., Ltd.**
**Shenzhen, Guangdong 518129 (CN)**

(72) Inventors:
• **TIAN, Yang**
  **Shenzhen, Guangdong 518129 (CN)**
• **CHAI, Xiaomeng**
  **Shenzhen, Guangdong 518129 (CN)**
• **SUN, Yan**
  **Shenzhen, Guangdong 518129 (CN)**
• **PANG, Jiyong**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **METHOD AND APPARATUS FOR POSITIONING**

(57) A positioning method and an apparatus are provided. The method includes: A first communication apparatus separately measures a first reference signal and a second reference signal from a second communication apparatus, and determines a first measurement result of the first reference signal and a second measurement result of the second reference signal. The first communication apparatus determines whether a first metric corresponding to the first measurement result meets a first condition. The first communication apparatus sends all or a part of the second measurement result to a location management apparatus based on a determining result, where all or the part of the second measurement result is used to determine location information of the first communication apparatus or the second communication apparatus based on an AI manner. In this application, reported measurement results may be adaptively adjusted based on different measurement results.

UE    Base station    LMF

1101: First reference signal and second reference signal

1101: Separately measure the first reference signal and the second reference signal, and determine a first measurement result of the first reference signal and a second measurement result of the second reference signal

1102: Determine whether a first indicator corresponding to the first measurement result meets a first condition

1103: Send all or a part of the second measurement result to the LMF based on a determining result, where all or the part of the second measurement result is used to determine location information of the UE based on an AI manner

FIG. 11

EP 4 615 014 A1

**Description**

CROSS-REFERENCE TO RELATED APPLICATIONS

This application claims priority to Chinese Patent Application No. 202211462933.3, filed with the China National Intellectual Property Administration on November 21, 2022 and entitled "POSITIONING METHOD AND APPARATUS", which is incorporated herein by reference in its entirety.

TECHNICAL FIELD

Embodiments of this application relate to the field of communication technologies, and in particular, to a positioning method and an apparatus.

BACKGROUND

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or an ultra-large connection. This feature makes network planning, network configuration, and/or resource scheduling increasingly complex. In addition, the network has increasingly powerful functions, for example, supports an increasingly high spectrum, a higher-order multiple-input multiple-output (multiple-input multiple-output, MIMO) technology, and new technologies such as beamforming and/or beam management. These new requirements, scenarios, and features bring unprecedented challenges to network planning, operation and maintenance, and efficient operation. To cope with these challenges, an artificial intelligence technology may be introduced into the wireless communication network, to implement network intelligence. Based on this, how to effectively use artificial intelligence to position a terminal device in a network is a problem worth studying.

SUMMARY

Embodiments of this application provide a positioning method and an apparatus, to position a terminal device through artificial intelligence.

According to a first aspect, a positioning method is provided. The method includes: A first communication apparatus separately measures a first reference signal and a second reference signal from a second communication apparatus, and determines a first measurement result of the first reference signal and a second measurement result of the second reference signal. The first communication apparatus determines whether a first metric corresponding to the first measurement result meets a first condition. The first communication apparatus sends all or a part of the second measurement result to a location management apparatus based on a determining result, where all or the part of the second measurement result is used to determine location information of the first communication apparatus or the second communication apparatus based on an artificial intelligence AI manner.

Optionally, in downlink positioning, the first communication apparatus is a terminal, or a chip, a circuit, or the like used in the terminal, and the second communication apparatus is an access network device, or a chip or a circuit used in the access network device. Alternatively, in uplink positioning, the first communication apparatus is an access network device, or a chip, a circuit, or the like used in the access network device, and the second communication apparatus is a terminal, or a chip or a circuit used in the terminal. Optionally, the location management apparatus may be an LMF, or a chip or a circuit used in the LMF.

According to the foregoing design, the first communication apparatus adaptively adjusts, based on different measurement results, measurement results reported to the location management apparatus. In addition, when the first measurement result meets the first condition, the first communication apparatus reports some measurement results to the location management apparatus, thereby reducing transmission overheads.

In a design, the method further includes: The first communication apparatus receives first information from the location management apparatus or the second communication apparatus, where the first information indicates a first threshold in the first condition.

According to the foregoing design, the location management apparatus, the second communication apparatus, or the like may configure the first threshold for the first communication apparatus, and the first communication apparatus determines, based on the configured first threshold, to report all or some measurement results to the location management apparatus. The location management apparatus, the second communication apparatus, or the like may configure corresponding first thresholds for the first communication apparatus based on different positioning accuracy of the terminal, so that reference signal transmission overheads can be reduced as much as possible while positioning accuracy is met.

In a design, the first threshold includes one or more of the following: a signal to interference plus noise ratio SINR threshold, a first path power threshold, or a reference signal received power RSRP threshold. The first measurement result or the second measurement result includes a channel frequency domain response CFR, a channel impulse response CIR, or RSRP.

In a design, that all or the part of the second measurement result is used to determine location information of the first communication apparatus or the second communication apparatus based on an AI manner includes: all or the part of the second measurement result is used as or is used to determine an input of an AI model, and an output of the AI model is used as or is used to determine the location information of the first communication apparatus or the second communication apparatus.

In a design, that the first communication apparatus sends all or a part of the second measurement result to a location management apparatus based on a determining result includes: The first metric corresponding to the first measurement result meets the first condition.

The first communication apparatus sends the part of the second measurement result to the location management apparatus.

According to the foregoing design, when the first metric corresponding to the first measurement result meets the first condition, it indicates that the measurement result indicates that a location capability of the terminal is relatively strong. In comparison with reporting all of the second measurement result by the first communication apparatus to the location management apparatus, reporting the part of the second measurement result by the first communication apparatus to the location management apparatus can reduce measurement result reporting overheads regardless of a scenario.

In a design, that the first communication apparatus sends all or a part of the second measurement result to a location management apparatus based on a determining result includes: The first metric corresponding to the first measurement result meets the first condition. The first communication apparatus sends first configuration information to the second communication apparatus, or the first communication apparatus receives first configuration information from the second communication apparatus, where the first configuration information is used to configure the second reference signal with a reduced configuration. The first communication apparatus sends all or the part of the second measurement result to the location management apparatus. Optionally, the second reference signal with a reduced configuration meets one or more of the following: a reduction in transmit power relative to the first reference signal, a reduction in a quantity of antenna ports relative to the first reference signal, or a reduction in a time-frequency resource relative to the first reference signal.

According to the foregoing design, when the first metric corresponding to the first measurement result meets the first condition, it indicates that a channel measurement result indicates that a location capability of the terminal is relatively strong, and the second reference signal with a reduced configuration relative to the first reference signal may be configured. In comparison with reporting all of the first measurement result of the first reference signal by the first communication apparatus to the location management apparatus, reporting all or the part of the second measurement result of the second reference signal by the first communication apparatus to the location management apparatus can reduce reporting overheads.

In a design, that the first communication apparatus sends all or a part of the second measurement result to a location management apparatus based on a determining result includes: The first metric corresponding to the first measurement result does not meet the first condition.

The first communication apparatus sends all of the second measurement result to the location management apparatus.

According to the foregoing design, when the first metric corresponding to the first measurement result does not meet the first condition, it indicates that a channel measurement result indicates that a location capability of the terminal is relatively weak. In this case, the first communication apparatus may report all of the second measurement result to the location management apparatus. Therefore, reported measurement results are adaptively adjusted based on different measurement results.

In a design, the method further includes: The first metric corresponding to the first measurement result does not meet the first condition. The first communication apparatus sends request information to the second communication apparatus or the location management apparatus, where the request information is used to request an enhanced configuration for the second reference signal. The first communication apparatus receives second configuration information from the second communication apparatus or the location management apparatus, where the second configuration information is used to configure the second reference signal with an enhanced configuration. Optionally, the second reference signal is the second reference signal with an enhanced configuration. The second reference signal with an enhanced configuration meets one or more of the following: an increase in transmit power relative to the first reference signal, an increase in a quantity of antenna ports relative to the first reference signal, or an increase in a time-frequency resource relative to the first reference signal.

According to the foregoing design, when the first metric corresponding to the first measurement result does not meet the first condition, it indicates that a channel measurement result indicates that a location capability of the terminal is relatively weak, and the second reference signal with an enhanced configuration relative to the first reference signal may be configured. The first communication apparatus reports all or the part of the second measurement result of the second reference signal with an enhanced configuration to the location management apparatus, and the location management apparatus uses all or the part of the second measurement result of the second reference signal with an enhanced configuration to perform high-accuracy positioning on the terminal.

In a design, the method further includes: The first communication apparatus sends second configuration information to the second communication apparatus, where the second configuration information is used to configure the second reference signal with an enhanced configuration.

In a design, the first reference signal is an initial period or an initial reference signal, and the method further includes: The first communication apparatus sends all of the first measurement result of the first reference signal to the location management apparatus.

According to a second aspect, a positioning method is provided, including: A second communication apparatus sends first configuration information to a first communication apparatus, where the first configuration information is used to configure a first reference signal. The second communication apparatus sends second configuration information to the first communication apparatus, where the second configuration information is used to configure the second reference signal with a reduced configuration or the second reference signal with an enhanced configuration. Optionally, the second communication apparatus is an access network device, or a chip, a circuit, or the like used in the access network device, and the first communication apparatus is a terminal, or a chip, a circuit, or the like used in the terminal.

According to the foregoing design, the access network device may first configure the first reference signal for the terminal, and then the access network device configures, for the terminal, the second reference signal with a reduced configuration or an enhanced configuration relative to the first reference signal. In this way, corresponding reference signals are configured for the terminal based on different radio channel environments, so that reference signal transmission overheads can be reduced as much as possible while positioning accuracy is ensured.

Optionally, the second reference signal with a reduced configuration meets one or more of the following: a reduction in transmit power relative to the first reference signal, a reduction in a quantity of antenna ports relative to the first reference signal, or a reduction in a time-frequency resource relative to the first reference signal. Alternatively, optionally, the second reference signal with an enhanced configuration meets one or more of the following: an increase in transmit power relative to the first reference signal, an increase in a quantity of antenna ports relative to the first reference signal, or an increase in a time-frequency resource relative to the first reference signal.

In a design, the method further includes: The second communication apparatus receives first information from a location management apparatus, where the first information indicates a first threshold in a first condition, and the first condition is used to determine a first measurement result of the first reference signal. Optionally, the first threshold includes one or more of the following: a signal to interference plus noise ratio SINR threshold, a first path power threshold, or reference signal received power RSRP threshold.

According to a third aspect, a positioning method is provided, including: A location management apparatus sends first information to a first communication apparatus, where the first information indicates a first threshold in a first condition, the first condition is used to determine a first measurement result of a first reference signal, and a determining result is used to determine to report all or a part of a second measurement result of a second reference signal. The location management apparatus receives all or the part of the second measurement result of the second reference signal from the first communication apparatus. The location management apparatus determines location information of the first communication apparatus or a second communication apparatus based on an artificial intelligence AI model and all or the part of the second measurement result.

Optionally, the location management apparatus may be an LMF, or a chip, a circuit, or the like used in the LMF. In downlink positioning, the first communication apparatus is a terminal, or a chip, a circuit, or the like used in the terminal. Alternatively, in uplink positioning, the first communication apparatus is an access network device, or a chip, a circuit, or the like used in the access network device.

According to the foregoing design, the location management apparatus configures the first threshold for the first communication apparatus, the first communication apparatus determines, based on the first threshold, to report all or the part of the reported second measurement result, and the first communication apparatus adaptively adjusts the reported measurement result. Compared with a conventional triangular positioning manner of determining a location of the terminal, an AI manner of determining a location of the terminal by the location management apparatus can improve positioning accuracy of the terminal.

In a design, the first reference signal is an initial period or an initial reference signal, and the method further includes: The location management apparatus receives all of the first measurement result of the first reference signal from the first communication apparatus. The location management apparatus determines first location information of the first communication apparatus or the second communication apparatus based on all of the first measurement result and the AI model.

According to the foregoing design, in the initial period or the initial reference signal, the first communication apparatus reports all of measurement results of the first communication apparatus to the location management apparatus. The apparatus management apparatus infers location information of the terminal based on all of the measurement results in the initial period or the initial reference signal. The location information may be referred to as first location information of the terminal. The first communication apparatus reports all of the measurement results, and the location management apparatus infers the location information of the terminal based on all of the measurement results, thereby improving accuracy of inferring the location information of the terminal.

In a design, that the location management apparatus determines location information of the first communication apparatus or the second communication apparatus based on an AI model and all or the part of the second measurement result includes: The location management apparatus determines an input of the AI model based on all of the first measurement result, the first location information, and all or the part of the second measurement result. For example, an input dimension of the AI model includes a port corresponding to a measurement result and a port corresponding to location information. Comprehensive processing may be performed on all of the first measurement result, all or the part of the second measurement result, and the like, a processing result is input into a port corresponding to a measurement result of the AI model, and the first location information is input into a port corresponding to a location of the AI model, and the like. The location management apparatus determines second location information of the first communication apparatus or the second communication apparatus based on the AI model and the input of the AI model.

According to the foregoing design, in a non-initial period or a non-initial reference signal, the second communication apparatus reports all or some measurement results of measurement of the second communication apparatus to the location management apparatus. The location management apparatus infers the location information of the terminal with reference to a plurality of the following items: the first location information of the terminal that is determined based on the first measurement result of the first reference signal, all of the first measurement result, all or the part of the second measurement result, and the like. The location information may be referred to as second location information of the terminal. The location management apparatus may infer location information of the terminal in a $2^{nd}$ period with reference to the first measurement result reported previously, the inferred first location information of the terminal, and the like, thereby improving accuracy of inferring the location information of the terminal.

In a design, the method further includes: The location management apparatus receives a request message from the first communication apparatus, where the request message is used to request an enhanced configuration for the second reference signal. The location management apparatus sends second configuration information to the first communication apparatus, where the second configuration information is used to configure the second reference signal with an enhanced configuration; or the location management apparatus sends indication information to the second communication apparatus, where the indication information indicates the second communication apparatus to configure the second reference signal with an enhanced configuration for the first communication apparatus. Optionally, the second reference signal is the second reference signal with an enhanced configuration. The second reference signal with an enhanced configuration meets one or more of the following: an increase in transmit power relative to the first reference signal, an increase in a quantity of antenna ports relative to the first reference signal, or an increase in a time-frequency resource relative to the first reference signal.

In a design, the method further includes: The location management apparatus receives a positioning request from a location request apparatus. The location management apparatus determines the first information based on the positioning request. The location management apparatus sends the location information of the first communication apparatus or the second communication apparatus to the location request apparatus.

According to the foregoing design, the location management apparatus may configure corresponding first thresholds for the first communication apparatus based on different positioning accuracy requested by a positioning request apparatus. The foregoing first threshold is configured for the first communication apparatus by using the first information. This implements matching between a first threshold and positioning accuracy.

In a design, that the location management apparatus determines the first information based on the positioning request includes: The location management apparatus determines a positioning mode based on the positioning request. The location management apparatus determines the first information based on the positioning mode.

According to the foregoing design, different positioning accuracy may exist in different positioning modes. The location management apparatus determines a corresponding positioning mode based on a positioning request, and determines, based on the positioning mode, first information for configuring a first threshold. This implements matching between a positioning threshold and a first threshold.

According to a fourth aspect, a positioning method is provided, including: A location request apparatus sends a positioning request to a location management apparatus. The location request apparatus receives location information of a first communication apparatus or a second communication apparatus from the location management apparatus.

According to a fifth aspect, an apparatus is provided. The apparatus includes a corresponding unit or module for performing the method according to any one of the first aspect to the fourth aspect. The unit or module may be implemented by a hardware circuit, or may be implemented by software, or may be implemented by a combination of a hardware circuit and software.

According to a sixth aspect, an apparatus is provided, including a processor and an interface circuit. The processor is configured to communicate with another apparatus through the interface circuit, and perform the method according to any one of the first aspect to the fourth aspect. There are one or more processors.

According to a seventh aspect, an apparatus is provided, including a processor coupled to a memory. The processor is configured to execute a program stored in the memory, to perform the method according to any one of the first aspect to the fourth aspect. The memory may be located inside or outside the apparatus. In addition, there may be one or more processors.

According to an eighth aspect, an apparatus is provided, including a processor and a memory. The memory is configured to store computer instructions. When the apparatus runs, the processor executes the computer instructions stored in the memory, to enable the apparatus to perform the method according to any one of the first aspect to the fourth aspect.

According to a ninth aspect, a chip system is provided, including a processor or a circuit, configured to perform the method according to any one of the first aspect to the fourth aspect.

According to a tenth aspect, a computer-readable storage medium is provided. The computer-readable storage medium stores instructions. When the instructions are run on a communication apparatus, the method according to any one of the first aspect to the fourth aspect is performed.

According to an eleventh aspect, a computer program product is provided. The computer program product includes a computer program or instructions. When the computer program or the instructions are run by an apparatus, the method according to any one of the first aspect to the fourth aspect is performed.

According to a twelfth aspect, a system is provided, including a first communication apparatus that performs the method according to the first aspect and a second communication apparatus that performs the method according to the second aspect. Optionally, the system further includes a location management apparatus that performs the method according to the third aspect. The system further includes a location request apparatus that performs the method according to the fourth aspect.

BRIEF DESCRIPTION OF DRAWINGS

FIG. 1a is a diagram of an architecture of a communication system according to an embodiment of this application;

FIG. 1b is a diagram of another architecture of a communication system according to an embodiment of this application;

FIG. 2 is a diagram of an O-RAN architecture according to an embodiment of this application;

FIG. 3 is another diagram of an O-RAN architecture according to an embodiment of this application;

FIG. 4 is a diagram of an architecture of an AI model application according to an embodiment of this application;

FIG. 5 is a diagram of a neuron according to an embodiment of this application;

FIG. 6 is a diagram of a layer structure of a neuron according to an embodiment of this application;

FIG. 7 is a diagram of triangular positioning according to an embodiment of this application;

FIG. 8 is a diagram of a UL-TDOA according to an embodiment of this application;

FIG. 9 is a diagram of using an AI model in uplink positioning according to an embodiment of this application;

FIG. 10 is another diagram of using an AI model in uplink positioning according to an embodiment of this application;

FIG. 11 is a flowchart of downlink positioning according to an embodiment of this application;

FIG. 12 is another flowchart of downlink positioning according to an embodiment of this application;

FIG. 13 is still another flowchart of downlink positioning according to an embodiment of this application;

FIG. 14 is a flowchart of uplink positioning according to an embodiment of this application;

FIG. 15 is another flowchart of uplink positioning according to an embodiment of this application;

FIG. 16 is still another flowchart of uplink positioning according to an embodiment of this application;

FIG. 17 is a diagram of an apparatus according to an embodiment of this application; and

FIG. 18 is another diagram of an apparatus according to an embodiment of this application.

<u>DESCRIPTION OF EMBODIMENTS</u>

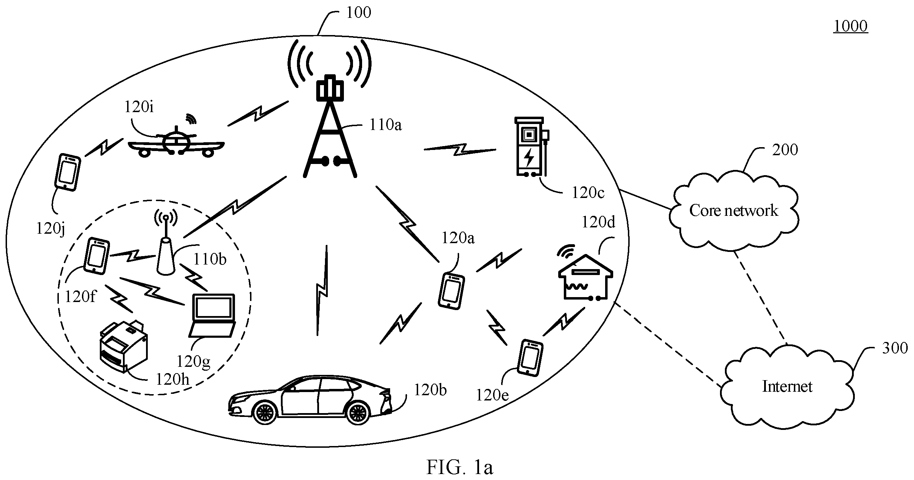

FIG. 1a is a diagram of an architecture of a communication system 1000 to which this application is applicable. As shown in FIG. 1a, the communication system 1000 includes a radio access network 100 and a core network 200. Optionally, the communication system 1000 may further include an internet 300.

The radio access network 100 may include at least one access network device (for example, 110a and 110b in FIG. 1a), and may further include at least one terminal device (for example, 120a to 120j in FIG. 1a). The terminal device is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or a part of the functions of the core network device and a part of the functions of the access network device may be integrated into one physical device. Terminal devices may be connected to each other in a wired or wireless manner, and access network devices may be connected to each other in a wired or wireless manner. FIG. 1a is only a diagram. The communication system 1000 may further include other network devices, for example, may further include a wireless relay device and a wireless backhaul device, which are not shown in FIG. 1a.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1a), or may be a micro base station or an indoor station (for example, 110b in FIG. 1a), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of a hardware circuit and a software module. The apparatus may be installed in the access network device, or may be matched with the access network device for use. In this application, the chip system may include a chip, or may include a chip and another discrete component. For ease of description, the following describes the technical solutions provided in this application by using an example in which the apparatus configured to implement the functions of the access network device is the access network device and the access network device is a base station.

(1) Protocol layer structure

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer used for transmission of data related to an AI function.

(2) Central unit (central unit, CU) and distributed unit (distributed unit, DU)

The access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

The division into processing functions of the CU and the DU based on the protocol layers is merely an example, or division may be performed in another manner. For example, the CU or the DU may have functions of more protocol layers through division. For another example, the CU or the DU may have some processing functions of the protocol layers through division. In a design, a part of functions of an RLC layer and a function of a protocol layer above the RLC layer are set on the CU, and a remaining function of the RLC layer and a function of a protocol layer below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement higher-layer functions of the PHY layer, and the RU may implement lower-layer functions of the PHY layer. When used for sending, a function of the PHY layer may include one or more of the following: cyclic redundancy check (cyclic redundancy check, CRC) code addition, channel encoding, rate matching, scrambling, modulation, layer mapping, precoding, resource mapping, physical antenna mapping, or radio frequency sending. When used for receiving, a function of the PHY layer may include one or more of the following: CRC check, channel decoding, rate de-matching, descrambling, demodulation, layer de-mapping, channel detection, resource de-mapping, physical antenna de-mapping, or radio frequency receiving. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to the radio frequency function. For example, the higher-layer functions of the PHY layer may include CRC code addition, channel encoding, rate matching, scrambling, modulation, and layer mapping, and the lower-layer functions of the PHY layer may include precoding, resource mapping, physical antenna mapping, and radio frequency sending. Alternatively, the higher-layer functions of the PHY layer may include CRC code addition, channel encoding, rate matching, scrambling, modulation, layer mapping, and precoding, and the lower-layer functions of the PHY layer may include resource mapping, physical antenna mapping, and radio frequency sending. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and radio frequency receiving. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and radio frequency receiving.

For example, functions of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. The methods performed by the modules also fall within the protection scope of this application.

The terminal device may also be referred to as a terminal, user equipment (user equipment, UE), a mobile station, a mobile terminal, or the like. The terminal device may be widely used in communication in various scenarios, for example, including but not limited to one or more of the following scenarios: device-to-device (device-to-device, D2D), vehicle-to-everything (vehicle-to-everything, V2X), machine-type communication (machine-type communication, MTC), an internet of things (internet of things, IOT), virtual reality, augmented reality, industrial control, self-driving, telemedicine, smart grid, smart furniture, smart office, smart wear, smart transportation, or smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in this application.

In this application, an apparatus configured to implement the functions of the terminal device may be the terminal device, or may be an apparatus that can support the terminal device in implementing the functions, for example, a chip system, a hardware circuit, a software module, or a combination of a hardware circuit and a software module. The apparatus may be installed in the terminal device, or may be matched with the terminal device for use. For ease of description, the following describes the technical solutions provided in this application by using an example in which the apparatus configured to implement the functions of the terminal device is the terminal device and the terminal device is UE.

The base station and the UE may be at fixed locations or are movable. The base station and/or the UE may be deployed on the land, including an indoor device, an outdoor device, a handheld device, or a vehicle-mounted device; or may be deployed on the water; or may be deployed on an airplane, a balloon, or an artificial satellite in the air. Application scenarios of the base station and the UE are not limited in this application. The base station and the UE may be deployed in a same scenario or different scenarios. For example, the base station and the UE are both deployed on the land. Alternatively, the base station is deployed on the land, and the UE is deployed on the water. Examples are not described one by one.

Roles of the base station and the UE may be relative. For example, a helicopter or an uncrewed aerial vehicle 120i in FIG. 1a may be configured as a mobile base station. For UE 120j accessing the radio access network 100 over 120i, the UE 120i is a base station. However, for the base station 110a, 120i is UE, to be specific, communication between 110a and 120i is performed according to a radio air interface protocol. Alternatively, communication between 110a and 120i may be performed according to an interface protocol between base stations. In this case, relative to 110a, 120i is also a base station. Therefore, the base station and the UE may be collectively referred to as communication apparatuses, 110a and 110b in FIG. 1a may be referred to as communication apparatuses having base station functions, and 120a to 120j in FIG. 1a may be referred to as communication apparatuses having UE functions.

Communication between a base station and UE, between base stations, and between UEs may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource for wireless communication is not limited in this application.

In this application, the base station sends a downlink signal or downlink information to the UE, where the downlink signal or the downlink information is carried on a downlink channel; and the UE sends an uplink signal or uplink information to the base station, where the uplink signal or the uplink information is carried on an uplink channel. To communicate with the base station, the UE may establish a wireless connection to a cell controlled by the base station. A cell that establishes a wireless connection to the UE is referred to as a serving cell of the UE. When communicating with the serving cell, the UE may be interfered with by a signal from a neighboring cell.

In this application, a device included in the core network 200 is not limited. For example, the core network 200 includes a location management device. The location management device is configured to collect a positioning-related measurement result, and determine location information of the UE based on the collected measurement result. The location management device may also be referred to as a positioning server, a location management function (location management function, LMF), or the like. This is not limited.

In this application, an apparatus configured to implement functions of the location management device may be the location management device, or may be an apparatus that can support the location management device in implementing the functions, for example, a chip system, a hardware circuit, a software module, or a combination of a hardware circuit and a software module. The apparatus may be installed in the location management device, or may be matched with the location management device for use. For ease of description, the following describes the technical solutions of this application by using an example in which the apparatus configured to implement the functions of the location management device is the location management device and the location management device is an LMF.

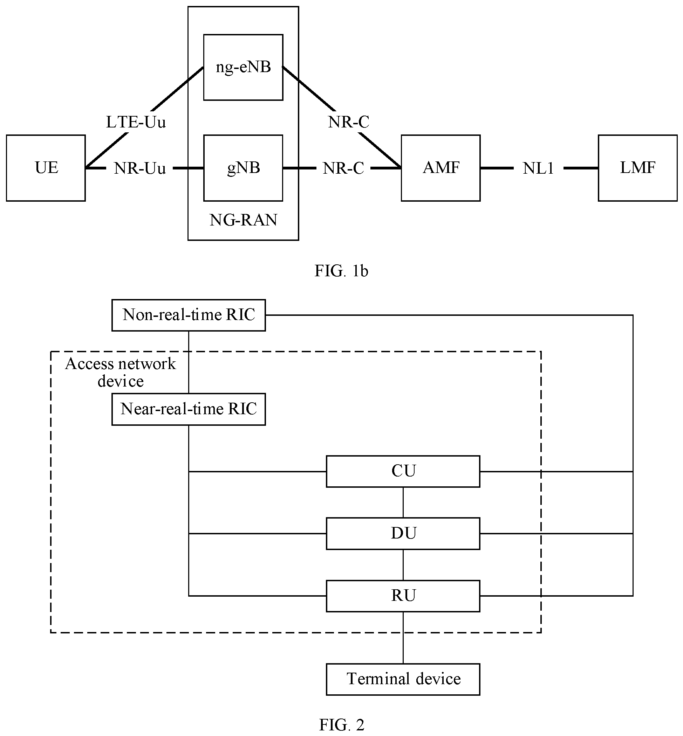

A new radio (new radio, NR) system in 5G is used as an example to describe UE, a base station, a core network, and the like. As shown in FIG. 1b, the base station includes a gNB and a next-generation evolved NodeB (next-generation evolved NodeB, ng-eNB).

The gNB is a base station in 5G, and the ng-eNB is a 4G base station that accesses a 5G core network. The core network includes network elements such as an access and mobility management function (access and mobility management function, AMF) and an LMF. The UE communicates with the gNB through an NR-Uu interface, the UE communicates with the ng-eNB through an LTE-Uu interface, and both the NR-Uu interface and the LTE-Uu interface may be used for transmission of positioning-related signaling. The LTE-Uu and the NR-Uu use a non-access stratum (non-access stratum, NAS) or an RRC protocol for transmission. An NG-C interface is used for communication between the gNB and the AMF and between the ng-eNB and the AMF, and may be used for transmission of positioning-related signaling. The NG-C uses an NG application protocol (NG application protocol, NGAP). An NL1 interface is used for communication between the AMF and the LMF, and may be used for transmission of positioning-related signaling. All or some functions implemented by one or more of the UE, the base station, or the core network may be virtualized, that is, implemented by using a special-purpose processor or a general-purpose processor, and a corresponding software module. Because the UE and the base station are related to an interface for air interface transmission, receiving and sending functions of the interface may be implemented by hardware. The core network, such as the AMF or the LMF, may be virtualized. Optionally, one or more functions of the virtualized UE, base station, or core network may be implemented by a cloud device, for example, implemented by a cloud device in an over the top (over the top, OTT) system.

The UE and the LMF may communicate with each other based on an LTE positioning protocol (LTE positioning protocol, LPP). The LPP protocol specifies a procedure of information exchange between the UE and the LMF. During actual deployment, the UE and the LMF are not directly connected, but are connected in a manner of UE-base station-AMF-LMF. An LPP message can be transparently transmitted between the base station and the AMF to implement interaction between the UE and the LMF. Alternatively, the UE and the LMF may exchange information or the like through forwarding by the base station and the AMF. This is not limited.

The base station and the LMF may interact with each other based on an NR positioning protocol A (NR positioning protocol A, NRPPa). The NRPPa protocol specifies a procedure of information exchange between the base station and the LMF. During actual deployment, the base station is connected to the LMF by using the AMF. The NRPPa protocol is transparent to the AMF. An NRPPa data unit is transparently transmitted across AMFs to implement interaction between the LMF and the base station.

It may be understood that, in this application, to support a machine learning function in a wireless network, an independent network element (for example, referred to as an AI network element or an AI node) may be introduced into the communication system shown in FIG. 1a or FIG. 1b to implement an AI-related operation. The AI network element or the AI node may be directly connected to an access network device in the communication system, or may be indirectly connected to an access network device by using a third-party network element. This is not limited. The third-party network element may be a core network element such as the AMF or a user plane function (user plane function, UPF). For example, the AI network element or the AI node may collect positioning-related information by using one or more of the following devices: the UE, the base station, the LMF, or the AMF. The information may be used as training data, to train an AI module that implements a positioning function, or the like. Alternatively, an AI function, an AI module, or an AI entity may be configured in a network element in the communication system shown in FIG. 1a or FIG. 1b to implement an AI-related operation, and the network element may be the LMF or the like. In this case, a network element that performs an AI-related operation may be referred to as a network element with a built-in AI function. The AI network element may be located in a host or a cloud server of the OTT system.

In this application, the access network device may use an O-RAN architecture. The following describes an example of the O-RAN architecture. This is not intended to limit this application.

In a first design, as shown in FIG. 2, the access network device includes a near-real-time access network intelligent control (RAN intelligent controller, RIC), a CU, a DU, an RU, and the like. The near-real-time RIC is used for model training and inference. For example, the near-real-time RIC may train an AI model, and use the AI model for inference. For example, the near-real-time RIC may obtain information on a network side or a terminal device side from one or more of a CU, a DU, an RU, a terminal device, or the like, where the information may be used as training data or inference data. For example, the foregoing information may be used as training data, and the near-real-time RIC may train the AI model by using the collected training data. Alternatively, the foregoing information may be used as inference data, and the near-real-time RIC may perform model inference based on the collected inference data and the AI model, to determine an inference result. Optionally, the near-real-time RIC may send the inference result to one or more of the CU, the DU, the RU, the terminal device, or the like. Optionally, the CU and the DU may exchange the inference result. For example, the near-real-time RIC sends the inference result to the CU, and the CU forwards the inference result to the DU. Optionally, the DU and the RU may exchange the inference result. For example, the near-real-time RIC sends the inference result to the DU; or the near-real-time RIC sends the inference result to the CU, and the CU forwards the inference result to the DU; and the DU forwards the inference result to the RU.

In the first design, the near-real-time RIC is included in the access network device. Whether a non-real-time RIC is included outside the access network device is not limited. For example, the non-real-time RIC may be included outside the access network device, or the non-real-time RIC may not be included outside the access network device.

In a second design, as shown in FIG. 2, a non-real-time RIC is included outside the access network device. For example, the non-real-time RIC may be located in an OAM or a core network device. This is not limited. The non-real-time RIC may train an AI model and use the AI model for inference. Optionally, the non-real-time RIC may collect information on a network side or a terminal device side from one or more of a CU, a DU, an RU, a terminal device, or the like, where the information may be used as training data or inference data. For example, the information is used as training data, and the non-real-time RIC may train the AI model by using the training data. Alternatively, the information is used as inference data, and the non-real-time RIC uses the inference data and the AI model to determine an inference result. Optionally, the non-real-time RIC may send the inference result to one or more of the CU, the DU, the RU, the terminal device, or the like. Optionally, the CU and the DU may exchange the inference result. The DU and the RU may exchange the inference result.

In the second design, the non-real-time RIC is included outside the access network device. Whether the access network device includes a near-real-time RIC is not limited. For example, the access network device may include the near-real-time RIC, or the access network device may not include the near-real-time RIC.

In a third design, as shown in FIG. 2, a near-real-time RIC is included in the access network device, and a non-real-time RIC is included outside the access network device. Similar to the first design, the near-real-time RIC may perform model training and inference; and/or similar to the second design, the non-real-time RIC may perform model training and inference; and/or the non-real-time RIC may perform model training, and the near-real-time RIC may perform model inference. For example, the non-real-time RIC may send a trained AI model to the near-real-time RIC, and the near-real-time RIC uses the AI model for model inference. Optionally, the non-real-time RIC and/or the near-real-time RIC may collect information on a network side or a terminal device side from one or more of a CU, a DU, an RU, a terminal device, or the like, where the information may be used as training data or inference data. For example, the information is used as training data, and the non-real-time RIC trains the AI model by using the training data. The information is used as inference data, and the near-real-time RIC uses the AI model and the inference data to determine an inference result. Optionally, the near-real-time RIC may send the inference result to one or more of the CU, the DU, the RU, the terminal device, or the like. Optionally, the CU and the DU may exchange the inference result. The DU and the RU may exchange the inference result.

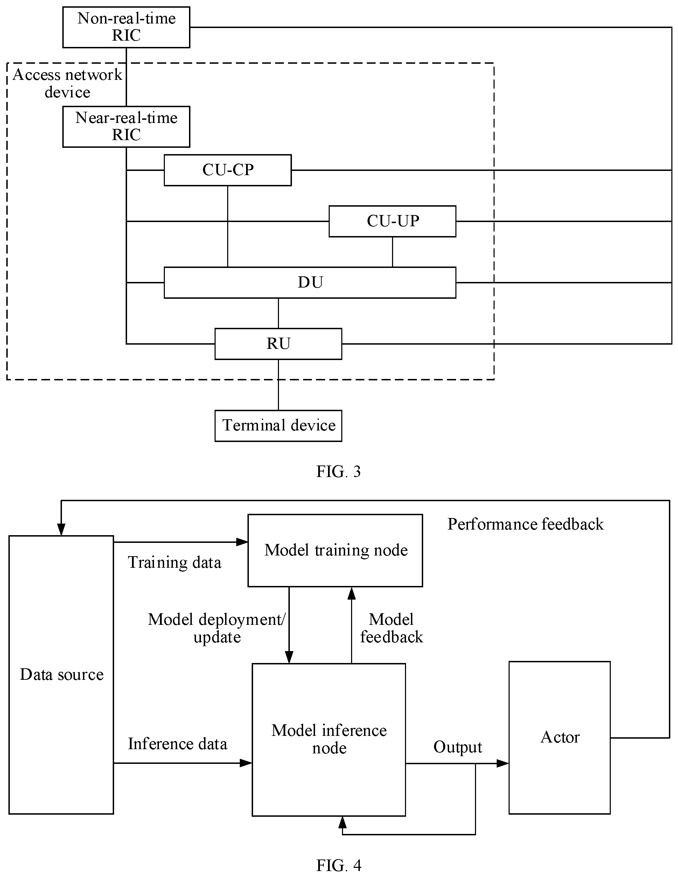

FIG. 3 shows another O-RAN architecture according to this application. Compared with FIG. 2, in FIG. 3, a CU is separated into a CU-CP and a CU-UP.

In this application, a terminal device is positioned by using an AI technology. The following describes the AI technology, and the descriptions are not intended to limit this application.

An AI model is a specific implementation of an AI function. The AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In this application, the AI function may include one or more of the following: data collection (collection of training data and/or inference data), data preprocessing, model training (or referred to as model learning), model information release (configuration of model information), model verification, model inference, or inference result release. In this application, the AI model may be referred to as a model for short.

FIG. 4 is a diagram of an application architecture of the AI model. A data source (data source) is configured to store training data and inference data. A model training node (model training host) analyzes or trains the training data (training data) provided by the data source, to obtain the AI model, and deploys the AI model on a model inference node (model inference host). Optionally, the model training node may further update the AI model that has been deployed on the model inference node. The model inference node may further feed back related information of the deployed model to the model training node, so that the model training node performs optimization, update, or the like on the deployed AI model.

Obtaining the AI model through learning by the model training node is equivalent to obtaining the mapping relationship between the input and the output of the model through learning by the model training node by using the training data. The model inference node uses the AI model to perform inference based on the inference data provided by the data source, to obtain an inference result. The method may alternatively be described as follows: The model inference node inputs the inference data to the AI model, and obtains the output by using the AI model, where the output is an inference result. The inference result may indicate a configuration parameter used (acted) by an actor object, and/or an operation performed by the actor object. The inference result may be planned by an actor (actor) entity in a unified manner, and sent to one or more actor objects (for example, network entities) for execution. Optionally, the actor entity or the actor object may feed back a parameter or a measurement result of a measurement quantity collected by the actor entity or the actor object to the data source. This process may be referred to as performance feedback, and the fed-back parameter may be used as training data or inference data. Optionally, feedback information related to model performance may be further determined based on the inference result that is output by the model inference node, and the feedback information is fed back to the model inference node; and the model inference node may feed back performance information of the model to the model training node based on the feedback information, so that the model training node performs optimization, update, or the like on the deployed AI model. This process may be referred to as model feedback.

The AI model may be a neural network or another machine learning model. The neural network is used as an example. The neural network is a specific implementation form of a machine learning technology. According to a universal approximation theorem, the neural network can theoretically approximate any continuous function, so that the neural network has a capability of learning any mapping. Therefore, the neural network can accurately perform abstraction modeling for a complex high-dimension problem.

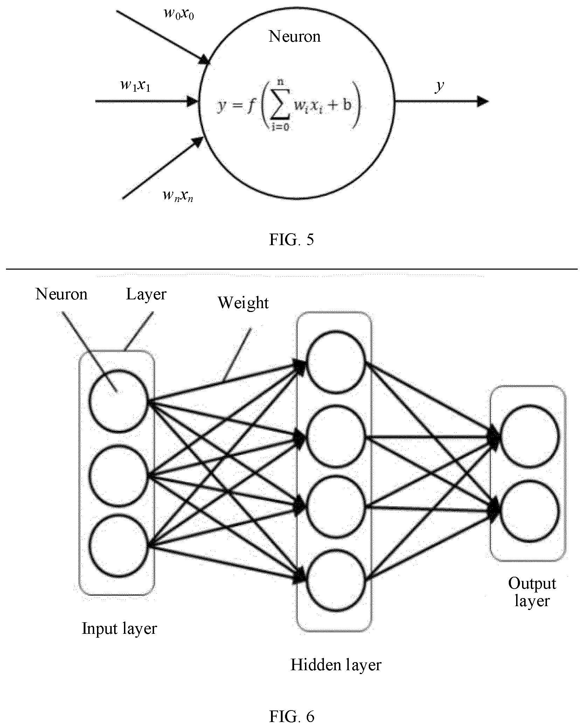

An idea of the neural network comes from a neuron structure of brain tissue. Each neuron performs a weighted summation operation on input values of the neuron, and outputs a weighted summation result through an activation function. FIG. 5 is a diagram of a structure of the neuron. It is assumed that an input of the neuron is x = [$x_0$, $x_1$, ... , $x_n$], a weight corresponding to each input is w = [w, $w_1$, ... , $w_n$], and a weighted summation bias is b. A form of the activation function may be diversified. It is assumed that an activation function of one neuron is y = f(z) = max(0, z), and an output of the neuron is $y = f\left(\sum_{i=0}^{i=n} w_i * x_i + b\right) = \max\left(0, \sum_{i=0}^{i=n} w_i * x_i + b\right)$. For another example, an activation function of one neuron is y = f(z) = z , and an output of the neuron is y = $f\left(\sum_{i=0}^{i=n} w_i * x_i + b\right) = \sum_{i=0}^{i=n} w_i * x_i + b$ . $x_i$, $w_i$, and b may be various possible values such as a decimal, an integer (including 0, a positive integer, a negative integer, or the like), or a complex number. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may be a quantity of layers included in the neural network, and a quantity of neurons included in each layer may be referred to as a width of the layer. FIG. 6 is a diagram of a layer relationship of the neural network. In an implementation, the neural network includes an input layer and an output layer. After performing neuron processing on a received input, the input layer of the neural network transfers a result to the output layer. The output layer obtains an output result of the neural network. In another implementation, the neural network includes an input layer, a hidden layer, and an output layer. The input layer of the neural network performs neuron processing on a received input, and then transfers a result to the intermediate hidden layer. The hidden layer transfers a calculation result to the output layer or an adjacent hidden layer. Finally, the output layer obtains an output result of the neural network. One neural network may include one hidden layer or a plurality of hidden layers that are sequentially connected. This is not limited. In a training process of the neural network, a loss function may be defined. The loss function describes a gap or difference between an output value and an ideal target value of the neural network. A specific form of the loss function is not limited in this application. The training process of the neural network is a process of adjusting a parameter of the neural network, such as the quantity of layers and the width of the neural network, a weight of the neuron, and/or a parameter in the activation function of the neuron, so that a value of the loss function is less than a threshold or meets a target requirement.

With development of mobile communication, positioning technologies based on a wireless cellular network are widely used. In these positioning technologies, a feature parameter between a mobile terminal device and a fixed base station is detected, information such as a relative location or an angle between the mobile terminal device and the fixed base station is obtained, and a location of the mobile terminal is estimated. Some common feature parameters include parameters such as a signal field strength, propagation time or a time difference, and a signal incident angle.

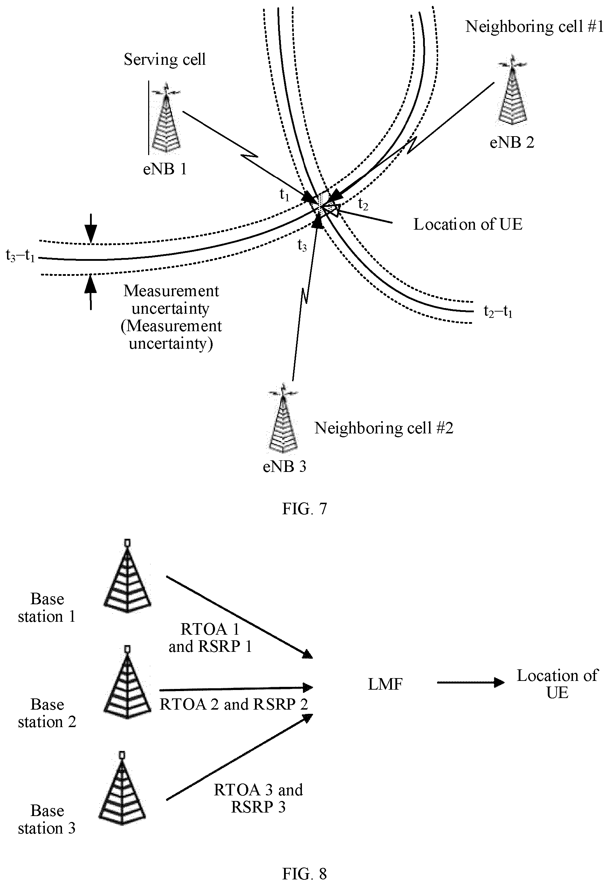

As shown in FIG. 7, in a typical positioning method based on a time difference of arrival (time difference of arrival, TDOA), three synchronized base stations are marked as an eNB 1, an eNB 2, and an eNB 3 respectively, distances between the three synchronized base stations and UE are d1, d2, and d3 respectively, and corresponding electromagnetic wave signals are propagated at time t1, t2, and t3 respectively. Downlink positioning is used as an example:

The three eNBs respectively send downlink reference signals to the UE, for example, positioning reference signals (positioning reference signal, PRS), which are respectively denoted as P1, P2, and P3. The UE may measure a time difference of arrival between P1 and P2, that is, t2-t1. d2-d1 is deduced by using t2-t1, and a curve is obtained, so that a difference between distances from each point on the curve to the eNB 2 and the eNB 1 is d2-d1. Similarly, the UE may measure a time difference of arrival between P3 and P1, that is, t3-t1. d3-d1 is deduced by using t3-t1, and another curve is obtained, so that a difference between distances from each point on the curve to the eNB 3 and the eNB 1 is d3-d1. A location of the UE may be determined by using an intersection point of the two curves. A mathematical model may be expressed as follows:

$$\begin{cases} \sqrt{(x'_2 - x')^2 + (y'_2 - y')^2} - \sqrt{(x'_1 - x')^2 + (y'_1 - y')^2} = d_2 - d_1 = c(t_2 - t_1) \\ \sqrt{(x'_3 - x')^2 + (y'_3 - y')^2} - \sqrt{(x'_1 - x')^2 + (y'_1 - y')^2} = d_3 - d_1 = c(t_3 - t_1) \end{cases}$$

($x'_i$, $y'_i$) represents location coordinates of an $i^{th}$ eNB, (x', y') represents to-be-calculated location coordinates of the UE, and c represents a speed of light.

Optionally, in FIG. 7, the eNB 1 is a base station corresponding to a serving cell of the UE, the eNB 2 is a base station corresponding to a neighboring cell #1 of the UE, and the eNB 3 is a base station corresponding to a neighboring cell #2 of the UE. In other words, in this application, the three eNBs participating in positioning may be respectively the base station corresponding to the serving cell of the UE and the base stations corresponding to the two neighboring cells of the UE. Optionally, one or more of the eNB 1, the eNB 2, or the eNB 3 may be replaced with a plurality of TRPs of a same cell, or the like. This is not limited. Optionally, because there is a specific synchronization error between different eNBs, corresponding measurement is also uncertain, which corresponds to an interval represented by a dotted line in FIG.

7. This process may be referred to as measurement uncertainty.

It may be understood that the foregoing describes a method for performing positioning based on a downlink reference signal sent by the eNB to the UE. This is also referred to as a downlink (downlink, DL)-TDOA. Similarly, positioning may be further performed based on an uplink reference signal sent by the UE to the eNB. The uplink reference signal may be a sounding reference signal (sounding reference signal, SRS). This is referred to as an uplink (uplink, UL)-TDOA. In addition to measuring the time difference, positioning may be performed by measuring a relative angle of arrival (angle of arrival, AoA) or angle of departure (angle of departure, AoD) of the base station.

In a design, the UE or the base station sends, to an LMF, a measurement result that reflects a measurement quantity of a channel response, and the LMF determines the location of the UE based on a triangular positioning principle. The UL-TDOA is used as an example. As shown in FIG. 8, the measurement result of the measurement quantity reported by the base station to the LMF may include relative time of arrival (relative time of arrival, RTOA), and the RTOA may be time at which the base station receives an uplink reference signal. Optionally, the measurement result of the measurement quantity may further include reference signal received power (reference signal received power, RSRP). After receiving the measurement result of the measurement quantity, the LMF determines the location information of the UE based on the triangular positioning principle.

In an actual scenario, due to impact of noise and interference, a measurement value of time or an angle has a specific measurement error, a positioning result also has a specific error, and positioning accuracy is low. Therefore, a positioning solution using machine learning is proposed:

An AI model may be deployed on an LMF side. The UE or the base station measures a reference signal to obtain a channel response or a channel response feature, and sends the channel response or the channel response feature to the LMF. The LMF uses the channel response or the channel response feature as an input of the AI model, and an output of the AI model is location information of the UE.

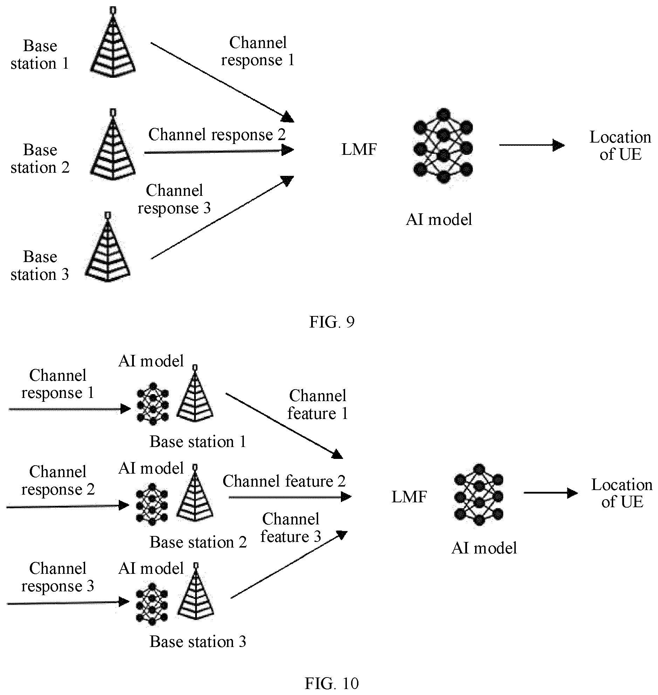

Uplink positioning is used as an example. The UE separately sends an SRS to the three base stations. As shown in FIG. 9, the three base stations separately measure the SRS to obtain three channel responses, where the three channel responses are respectively referred to as a channel response 1, a channel response 2, and a channel response 3; and feed back the three channel responses to the LMF. The LMF uses the three channel responses fed back by the three base stations as inputs of the AI model, and an output of the AI model is location information of the UE. Alternatively, as shown in FIG. 10, an AI model is deployed on a base station side, the base station uses an obtained channel response as an input of the AI model, and an output of the AI model is a channel feature corresponding to the channel response. For example, if a quantity of antennas of the base station is 16, and a quantity of subcarriers is 4096, the channel response of each base station is 16*4096 pieces of complex number information. The base station may extract a feature whose dimension is [128] from the channel response whose dimension is [16, 4096]. The base station feeds back the feature corresponding to the channel response to the LMF. The LMF uses the feature corresponding to the channel response as an input of the AI model, and an output of the AI model is location information of the UE.

Downlink positioning is similar to uplink positioning. A difference lies in that the base station sends a downlink reference signal to the UE, and the UE obtains a channel response, and sends the channel response or a feature corresponding to the channel response to the LMF.

In the solution in FIG. 9 or FIG. 10, the UE or the base station needs to feed back all of the channel responses or all of transformed features of the channel responses to the LMF, resulting in high feedback overheads. In the solutions of this application, the UE or the base station measures reference signals to obtain measurement results, determines whether the measurement results meet a first condition; and sends all or some of the measurement results to the LMF based on determining results. The measurement result is a channel response or a channel response feature obtained by measuring a reference signal. According to the solutions of this application, all or some of channel responses or corresponding features may be fed back based on different measurement results. The channel responses that are fed back are adaptively adjusted based on different measurement results. In addition, when the measurement results meet the first condition, some of the measurement results are fed back to the LMF, thereby reducing feedback overheads.

In this application, three positioning solutions are provided. The three positioning solutions are merely examples for description, and are not intended to limit this application. Solutions of sending all or some of measurement results to the LMF based on the measurement results all fall within the protection scope of this application.

First solution: A first communication apparatus separately measures a first reference signal and a second reference signal from a second communication apparatus, and determines a first measurement result of the first reference signal and a second measurement result of the second reference signal. The first communication apparatus determines whether the first measurement result meets a first condition. The first communication apparatus sends all or a part of the second measurement result to a location management apparatus based on a determining result, where all or the part of the second measurement result is used to determine location information of the first communication apparatus or the second communication apparatus based on an AI manner.

Second solution: A first communication apparatus measures a first reference signal from a second communication apparatus, and determines a first measurement result corresponding to the first reference signal. The first communication apparatus determines whether the first measurement result meets a second condition. The first communication apparatus sends all or a part of the first measurement result to a location management apparatus based on a determining result, where all or the part of the first measurement result is used to determine location information of the first communication apparatus or the second communication apparatus based on an AI manner.

Third solution: A first communication apparatus separately measures a first reference signal and a second reference signal from a second communication apparatus, and determines a first measurement result of the first reference signal and a second measurement result of the second reference signal. The first communication apparatus determines whether the first measurement result meets a first condition, and determines whether the second measurement result meets a second condition. The first communication apparatus sends all or a part of the second measurement result to a location management apparatus based on determining results, where all or the part of the second measurement result is used to determine location information of the first communication apparatus or the second communication apparatus based on an AI manner. Optionally, the first condition and the second condition may be the same or different. This is not limited.

In the foregoing three solutions, in downlink positioning, the first communication apparatus is a terminal device, or a chip or a circuit used in the terminal device, and the second communication apparatus is an access network device, or a chip or a circuit used in the access network device. In uplink positioning, the first communication apparatus is an access network device, or a chip or a circuit used in the access network device, and the second communication apparatus is a terminal device, or a chip, a circuit, or the like used in the terminal device. The location management apparatus is a location management device, or a chip, a circuit, or the like used in the location management device. A difference among the foregoing three solutions is as follows: In the first solution, the first communication apparatus sends all or the part of the second measurement result of the second reference signal to the location management apparatus based on the determining result of the first measurement result of the first reference signal. In the second solution, the first communication apparatus sends all or the part of the first measurement result to the location management apparatus based on the determining result of the first measurement result of the first reference signal. In the third solution, the first communication apparatus obtains the first measurement result of the first reference signal and the second measurement result of the second reference signal, and sends all or the part of the second measurement result to the location management apparatus based on the determining results of the first measurement result and the second measurement result. In the third solution, the first condition for determining of the first measurement result may be the same as or different from the second condition for determining of the second measurement result. This is not limited. When the determining result corresponding to the first measurement result is inconsistent with the determining result corresponding to the second measurement result, all or the part of the second measurement result may be sent to the location management apparatus based on a determining result with a higher weight in the two determining results. The following describes a positioning method in this application by using the first solution as an example.

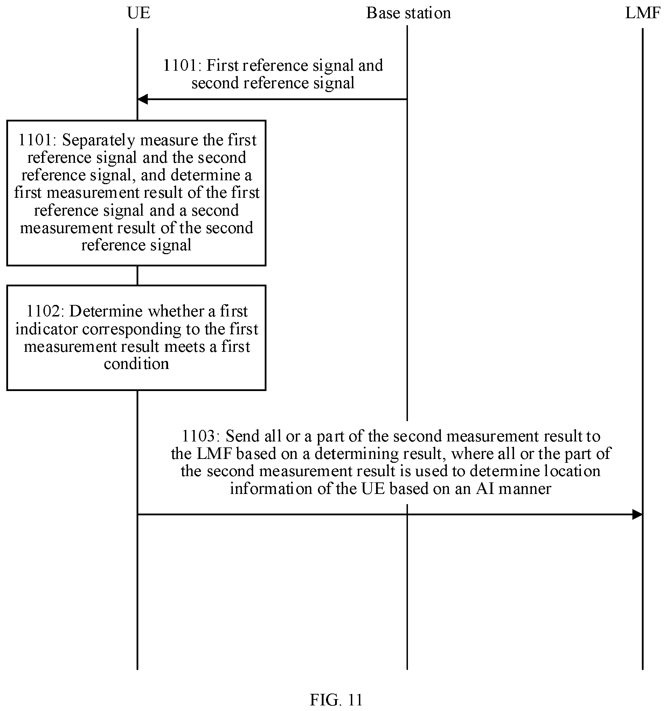

As shown in FIG. 11, an example in which the first solution is applied to downlink positioning, the first communication apparatus is UE, the second communication apparatus is a base station, and the location management apparatus is an LMF is used. A downlink positioning procedure is provided, including the following steps.

Step 1101: The UE separately measures a first reference signal and a second reference signal from the base station, and determines a first measurement result of the first reference signal and a second measurement result of the second reference signal.

In downlink positioning, the first reference signal and the second reference signal are downlink reference signals, for example, PRSs. In an implementation, the base station periodically sends a reference signal to the UE. For example, in a 1st period, the UE measures the first reference signal from the base station, and determines the first measurement result; and in a 2nd period, the UE measures the second reference signal from the base station, and determines the second measurement result.

Optionally, the first measurement result or the second measurement result may be a channel frequency domain response (channel frequency response, CFR), or the first measurement result or the second measurement result may be a channel impulse response (channel impulse response, CIR), or the first measurement result or the second measurement result is RSRP, or the like. This is not limited.

Step 1102: The UE determines whether a first metric corresponding to the first measurement result meets a first condition.

For example, the UE determines the first metric based on the first measurement result. The first metric includes but is not limited to one or more of the following: a signal to interference plus noise ratio (signal to interference plus noise ratio, SINR), first path power, reference signal received power (reference signal received power, RSRP), or the like. The first condition includes a first threshold, and the first threshold includes one or more of the following: an SINR threshold, a first path power threshold, an RSRP threshold, or the like. The first condition is specifically that the first metric is greater than or equal to (or greater than) the first threshold. When the first metric is greater than or equal to (or greater than) the first threshold, a determining result is that the first metric meets the first condition. Alternatively, when the first metric is less than (or less than or equal to) the first threshold, a determining result is that the first metric does not meet the first condition.

Optionally, the first threshold in the first condition may be specified in a protocol, or may be preset, or may be configured by the base station, the LMF, or the like for the UE, or the like. This is not limited. For example, the LMF configures the first threshold for the UE. An LPP protocol is used between the UE and the LMF, and transparent transmission is performed between the UE and the LMF across the base station and an AMF. The UE receives first information from the LMF, where the first information indicates the first threshold in the first condition. For example, in an implementation, before step 1101, the method further includes: The UE receives the first information from the LMF, where the first information indicates the first threshold in the first condition. Alternatively, interaction between the UE and the LMF needs to be forwarded by the AMF and the base station. In this case, the LMF may send, to the AMF, the first information indicating the first threshold in the first condition, and send the first information to the UE through forwarding by the AMF and the base station; and the UE may receive the first information from the base station. Alternatively, for example, the base station configures the first threshold for the UE. In this case, the base station may send the first information to the UE. Correspondingly, the UE receives the first information from the base station, where the first information indicates the first threshold in the first condition.

It may be understood that, in addition to the first threshold, a metric corresponding to the first threshold may further need to be configured for the UE, to indicate the UE to determine, based on the first measurement result, a specific metric that is used for determining. The metric may be specified in a protocol, or may be preset, or may be configured by the base station, the LMF, or the like for the UE, or the like. This is not limited. For example, the LMF configures the metric for the UE. Indication information of the indication may be carried in the first information, and is indicated to the UE together with the first threshold. For example, the UE receives the first information from the LMF, where the first information indicates the first threshold in the first condition and the corresponding metric. Alternatively, the indication information of the metric may be carried in another message, and is separately indicated to the UE. For example, the UE receives second information from the LMF, where the second information indicates a corresponding metric. Alternatively, one of the first threshold and the corresponding metric is preset, and the other is configured by the LMF, the base station, or the like for the UE. For example, the corresponding metric is preset, and the first threshold is configured by the LMF, the base station, or the like for the UE. For example, the corresponding metric is an SINR, and the first threshold is 30 dB. In this case, the UE determines the SINR based on the first measurement result, where the determined SINR may be considered as an SINR measured by the UE. If the SINR measured by the UE is greater than or equal to 30 dB, it is considered that the UE meets the first condition; otherwise, it is considered that the UE does not meet the first condition.

In an implementation, the first metric determined by the UE based on the first measurement result includes one or more metrics. When the first metric includes one metric, the UE determines the one metric based on the first measurement result, where the metric is referred to as the first metric. For example, the first metric includes the SINR. In this case, the first condition is that the SINR corresponding to the first measurement result is greater than or equal to the SINR threshold. For example, the first metric includes the first path power. The first condition is that the first path power corresponding to the first measurement result is greater than or equal to the first path power threshold. For example, the first metric is the RSRP. The first condition is that the RSRP corresponding to the first measurement result is greater than or equal to the RSRP threshold. Alternatively, when the first metric includes a plurality of metrics, the UE determines the plurality of metrics based on the first measurement result, where the plurality of metrics are collectively referred to as the first metric. For example, the first metric includes the plurality of the following items: the SINR, the first path power, or the RSRP. The first condition may be that an SINR measured by the UE is greater than or equal to the SINR threshold; first path power measured by the UE is greater than or equal to the first path power threshold; and RSRP measured by the UE is greater than or equal to the RSRP threshold. It may be understood that, when determining results determined based on the plurality of metrics included in the first metric are the same, the determining results may be used as a final determining result. For example, the first metric includes the SINR and the first path power. If the SINR measured by the UE is greater than or equal to the SINR threshold, and the first path power measured by the UE is greater than or equal to the first path power threshold, the final determining result may be that the first metric meets the first condition. Alternatively, when determining results determined based on the plurality of metrics included in the first metric are different, the foregoing determining results may be required to determine a final determining result. In an implementation, different weights may be set for different metrics; and a final determining result is determined based on determining results corresponding to different weight metrics. The foregoing example is still used. The first metric includes the SINR and the first path power. A weight of the SINR is a first weight, a weight of the first path power is a second weight, the first weight is greater than the second weight, and a sum of the first weight and the second weight is equal to 1. The SINR measured by the UE is greater than the SINR threshold, and the first path power measured by the UE is less than the first path power threshold. Because the weight of the SINR is greater than the weight of the first path power, the final determining result may be based on a determining result of the metric SINR, that is, the final determining result is that the first metric meets the first condition.

It may be understood that, in a wireless transmission environment, a downlink reference signal sent by the base station has a multipath signal after being reflected, refracted, and the like. A first path means a path signal arriving at the UE. The path signal is not a path signal whose collection point index (index) is equal to 0, but a path signal corresponding to a sampling point index with maximum signal strength. Alternatively, the first path may be determined by using an algorithm.

This is not limited.

Step 1103: The UE sends all or a part of the second measurement result to the LMF based on the determining result, where all or the part of the second measurement result is used to determine location information of the UE based on an AI manner.

In a design, when the determining result is that the first metric meets the first condition, a process in which the UE sends all or the part of the second measurement result to the LMF is described. It may be understood that the description is merely an example for description, and is not intended to limit this application.

Example 1: The UE sends the part of the second measurement result to the base station. For example, the UE sends measurement results of some subcarriers of the second reference signal to the base station. For example, the second reference signal occupies 4096 subcarriers in frequency domain. When the first metric corresponding to the first reference signal does not meet the first condition, the UE feeds back measurement results of 2048 subcarriers to the base station. Alternatively, the UE sends measurement results of some receive antenna ports of the second reference signal to the base station.

Example 2: The base station sends the second reference signal with a reduced configuration for the UE. The second reference signal with a reduced configuration meets one or more of the following: a reduction in transmit power relative to the first reference signal, a reduction in a quantity of antenna ports relative to the first reference signal, or a reduction in a time-frequency resource relative to the first reference signal. It may be understood that a reduction in an antenna port relative to the first reference signal may be specifically a reduction in a transmit antenna port and/or a receive antenna port relative to the first reference signal. This is not limited.

For example, the UE may measure the first reference signal, and determine the first measurement result. The UE determines whether the first measurement result meets the first condition. When the first measurement result does not meet the first condition, the UE sends a request message to the base station, or sends, to the base station, a determining result indicating that the first measurement result does not meet the first condition. The base station determines the second reference signal, where the second reference signal is a reduced configuration relative to the first reference signal. For example, a frequency domain resource of the second reference signal is less than a frequency domain resource of the first reference signal, the frequency domain resource of the first reference signal is 4096 subcarriers, and the frequency domain resource of the second reference signal is 2048 subcarriers. The base station sends first configuration information to the UE, where the first configuration information is used to configure the second reference signal with a reduced configuration, for example, configure the UE to receive the second reference signal on the 2048 subcarriers. This is not limited. The UE measures the second reference signal with a reduced configuration, and determines the second measurement result. For example, the UE measures the second reference signal with a reduced configuration on the 2048 subcarriers, and determines measurement results corresponding to the 2048 subcarriers. The UE sends all or some of the measurement results corresponding to the 2048 subcarriers to the LMF.

In a design, when the first metric corresponding to the determining result does not meet the first condition, a process in which the UE sends all or the part of the second measurement result to the LMF is described. It may be understood that the description is merely an example for description, and is not intended to limit this application.

Example 1: The UE sends all of the second measurement result to the LMF.

Example 2: The UE sends request information to the base station or the LMF, where the request information is used to request an enhanced configuration for the second reference signal. The UE receives second configuration information from the base station or the LMF, where the second configuration information is used to configure the second reference signal with an enhanced configuration. The UE receives the second reference signal with an enhanced configuration from the base station based on the second configuration information. In this embodiment of this application, the second reference signal may be the second reference signal with an enhanced configuration. Optionally, the second reference signal with an enhanced configuration meets one or more of the following: an increase in transmit power relative to the first reference signal, an increase in a quantity of antenna ports relative to the first reference signal, or an increase in a time-frequency resource relative to the first reference signal. The UE measures the second reference signal with an enhanced configuration, and determines the second measurement result. The UE sends, to the LMF, all or the part of the second measurement result of the second reference signal with an enhanced configuration, or the like. This is not limited.

For example, the UE measures the first reference signal, and determines the first measurement result. When the first metric corresponding to the first measurement result does not meet the first condition, the UE sends a request message to the LMF, where the request message is used to request the LMF to configure, for the UE, the second reference signal with an enhanced configuration relative to the first reference signal. The LMF and the UE may perform transparent transmission between the base station and the AMF by using the LPP protocol. The LMF sends the second configuration information to the UE, to configure the second reference signal with an enhanced configuration for the UE. Alternatively, transmission between the LMF and the UE requires forwarding by the base station and the AMF, or the like. This is not limited. Alternatively, when receiving the request message of the UE, the LMF may send indication information to the base station, where the indication information indicates the base station to configure the second reference signal with an enhanced configuration for the UE, or the like. After receiving the indication information of the LMF, the base station sends second configuration information to the UE, where the second configuration information is used to configure the second reference signal with an enhanced configuration for the UE, or the like. Alternatively, the UE may send a request message to the base station, where the request message is used to request the base station to configure the second reference signal with an enhanced configuration for the UE. When receiving the request message, the base station sends, to the UE, the second configuration information used to configure an enhanced configuration, or the like.

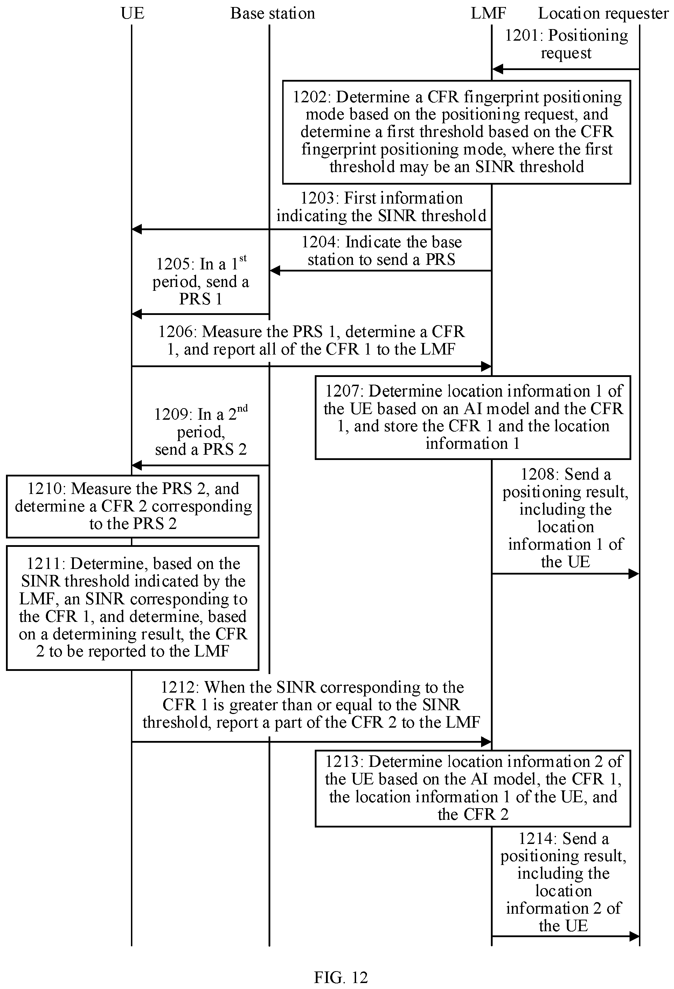

In a design, the base station periodically sends a downlink reference signal to the UE. For example, in an $i^{th}$ period, the base station sends a reference signal i to the UE; the UE measures the reference signal i, and determines a measurement result i; and the UE determines whether a metric i corresponding to the measurement result i meets the first condition. In an $(i+)^{th}$ period, the base station sends a reference signal i+1 to the UE; the UE measures the reference signal i+1, and determines a measurement result i+1; and the UE sends all or a part of the measurement result i+1 to the LMF based on a determining result of the $i^{th}$ period. A value of i is a positive integer greater than or equal to 1. In this implementation, the reference signal i may correspond to the first reference signal in the procedure in FIG. 11, and the reference signal i+1 corresponds to the second reference signal in the procedure in FIG. 12. It can be learned from the foregoing descriptions that the UE sends a measurement result of a reference signal in the $(i+1)^{th}$ period to the LMF based on a determining result of a reference signal in the $i^{th}$ period. When the value of i is 1, for a measurement result in an initial period, no determining result in a previous period can be referenced. Therefore, for a reference signal in the initial period, the UE sends all or a part of the measurement result of the reference signal to the LFM. In other words, when the first reference signal in the procedure in FIG. 11 is the reference signal in the initial period, the method in the procedure in FIG. 11 further includes: The UE sends all of the first measurement result of the first reference signal to the LMF. Optionally, the reference signal in the initial period may be a reference signal sent by the base station to the UE in a $1^{st}$ period.

In another design, whether the base station sends a downlink reference signal in a unit of a period is not limited. For example, the base station sends a reference signal i to the UE; the UE measures the reference signal i, and determines a measurement result i; and the UE determines whether a metric i corresponding to the measurement result i meets the first condition. The base station sends a reference signal i+1 to the UE; and the UE sends all or a part of a measurement result i+1 of the reference signal i+1 to the UE based on a determining result of the measurement result i. A value of i is an integer greater than or equal to 1. When the value of i is 1, a first reference signal 1 is an initial reference signal, and no determining result of a previous reference signal can be referenced. Therefore, the UE sends all of a measurement result of the initial reference signal to the LMF. The reference signal i may correspond to the first reference signal in the procedure in FIG. 11, and the reference signal i+1 may correspond to the second reference signal in the procedure in FIG. 11. In other words, when the first reference signal is the initial reference signal, the method in the procedure in FIG. 11 further includes: The UE sends all of the first measurement result of the first reference signal to the LMF. Optionally, the initial reference signal may be a $1^{st}$ reference signal sent by the base station to the UE when the UE accesses the base station in a wireless manner, or may be a $1^{st}$ reference signal sent, when the UE accesses a cell in the base station in a wireless manner and the cell is used as a serving cell of the UE, by the base station to the UE by using the serving cell, or the like. This is not limited.

In a design, when the first measurement result or the second measurement result is RSRP, in an implementation, in a $1^{st}$ measurement process, the LMF may configure X base stations to send downlink reference signals, and the UE separately measures the downlink reference signals sent by the X base stations, and determines X measurement results, where each measurement result corresponds to RSRP measured for a downlink reference signal sent by one base station. The first measurement result reported by the UE to the LMF includes the X measurement results. When the LMF determines that Z measurement results in the X measurement results are greater than or equal to the RSRP threshold, in the $2^{nd}$ period, Y base stations corresponding to Y measurement results in the Z measurement results may be configured to send downlink reference signals. Optionally, a manner of selecting the Y base stations from Z base stations corresponding to the Z measurement results is not limited. For example, the Y base stations may be randomly selected from the Z base stations, or the Y base stations corresponding to the Y measurement results whose RSRP values rank top in the measurement results may be selected, or the Y base stations are selected based on another algorithm. This is not limited. In a $2^{nd}$ measurement process, the Y base stations send downlink reference signals to the UE; and the UE measures the downlink reference signals of the Y base stations, and determines the Y measurement results, where the second measurement result reported by the UE to the LMF includes the Y measurement results. X, Z, and Y all are integers, X is greater than Z, and Z is greater than Y.

Step 1104: The LMF determines location information of the UE based on an AI model and all or the part of the second measurement result.

In a design, all or the part of the second measurement result is used as or is used to determine an input of the AI model, and an output of the AI model is used as or is used to determine the location information of the UE.

For example, the LMF uses all or the part of the second measurement result as the input of the AI model, and inputs all or the part of the second measurement result into the AI model, and the output of the AI model is the location information of the UE. Alternatively, the LMF determines the input of the AI model based on all or the part of the second measurement result. For example, all or the part of the second measurement result includes data of m ports of a reference signal, and an input dimension of the AI model is n ports. The input of the AI model is determined based on a mapping relationship between the m ports and the n ports.

The LMF inputs the determined AI input into the AI model, and the output of the AI model is directly the location information of the UE. Alternatively, the LMF may determine the location information of the UE based on the output of the AI model, or the like. This is not limited.

Optionally, as described above, the UE may send all of the first measurement result to the LMF. The method further includes: The LMF receives all of the first measurement result from the UE. The LMF determines the location information of the UE based on all of the first measurement result and the AI model. For example, all of the first measurement result is directly used as the input of the AI model, or the input of the AI model is determined after all of the first measurement result is further processed; and the output of the AI model is directly the location information of the UE. Alternatively, after the output of the AI model is further processed, the location information of the UE is determined, or the like. This is not limited.

Optionally, when the location information of the UE is determined in step 1104, all of the first measurement result and/or the location information of the UE that is determined based on all of the first measurement result may also be considered. For ease of distinguishing, the location information of the UE that is determined based on all of the first measurement result may be referred to as first location information of the UE. The location information of the UE that is determined based on at least all or the part of the second measurement result is referred to as second location information of the UE. In this embodiment of this application, a process of determining the second location information of the UE in step 1104 includes:

The LMF determines the input of the AI model based on all of the first measurement result, the first location information, and all or the part of the second measurement result. The LMF determines the second location information of the UE based on the AI model and the input of the AI model.

It may be understood that an input dimension of the AI model includes a port corresponding to a measurement result and a port corresponding to location information. Comprehensive processing may be performed on all of the first measurement result and all or the part of the second measurement result, and a processing result is input into a corresponding port of the AI model. In this embodiment of this application, a specific manner of the foregoing processing is not limited. For example, all of the second measurement result and all or the part of the second measurement result are integrated into one measurement result.

Optionally, the AI model is used to predict the location information of the UE, and the AI model may be referred to as a model for short. This is not limited. The AI model is specified in a protocol, or is preset, or is trained by the LMF, or is trained by a third-party device other than the LMF, and the trained AI model is configured for the LMF. This is not limited. The third-party device may include another core network device other than the LMF, for example, the AMF.

In this embodiment of this application, a manner of training the AI model includes but is not limited to a machine learning method such as supervised learning, unsupervised learning, or reinforcement learning. For ease of understanding, the following describes the foregoing three machine learning methods by using examples. The descriptions are not intended to limit embodiments of this application.

1. Supervised learning

Supervised learning uses a collected training sample and sample label to learn a mapping relationship between the training sample and sample label by using a machine learning algorithm, and uses a model to express the learned mapping relationship. For example, in this embodiment of this application, a first model may represent a mapping relationship between a measurement result and location information of the UE, and a model training process may be considered as a mapping relationship learning process. Through supervised learning, the mapping relationship expressed by the trained model may be a linear mapping relationship, a non-linear mapping relationship, or the like. Learning tasks may be classified into classification tasks and regression tasks based on sample label types. For supervised learning, during training, an error between a predicted value of a model and a sample label may be determined; and if the error between the predicted value of the model and the sample label is greater than or equal to a preset value, a model parameter is optimized or adjusted, and training continues for a model whose parameter is optimized or adjusted. If the difference between the predicted value of the model and the sample label is less than the predicted value, it is considered that training is completed.

2. Unsupervised learning

Unsupervised learning uses a collected training sample and a machine learning algorithm to explore an internal pattern of the training sample. In unsupervised learning, a type of algorithm uses a training sample as a supervised signal, that is, a sample label. A mapping relationship between a training sample and a training sample in model learning is referred to as self-supervised learning. For self-supervised learning, during training, an error between a predicted value of a model and a training sample is calculated to optimize a model parameter, until an error between an output of the model and the training sample is less than a preset value, model training is completed.

3. Reinforcement learning

Reinforcement learning is an algorithm for learning a problem resolving strategy through interaction with an environment. Reinforcement learning is different from supervised learning. Reinforcement learning does not have a specific sample label. The reinforcement learning algorithm needs to interact with the environment to obtain a reward signal fed back by the environment, and then adjust a decision action of the model to obtain a better reward signal. Reinforcement learning is learning a mapping relationship between an environment status and a decision-making action. However, a model cannot be optimized based on an error between a decision-making action and a "correct action" because a specific sample label ("correct action") cannot be obtained. Reinforcement learning training optimizes a model parameter through iterative interaction with the environment, until the reward signal of the environment that is obtained by the decision-making action that is output by the model meets a requirement.

Supervised learning is used as an example. An AI model training process includes: determining location information of the UE by using a training sample and an AI model; and optimizing or adjusting the AI model based on the location information of the UE and a label corresponding to the training sample.

The foregoing AI model training process may be an iterative process. For example, in a $1^{st}$ model training process, the AI model is an initial model, and the initial model is preconfigured, or is preset, or is specified in a protocol. This is not limited. The $1^{st}$ model training process includes: A training sample is input into an AI model, where an output of the AI model is location information of the UE. Alternatively, information obtained after the training sample is processed may be used as an input of the AI model, and the location information of the UE is determined after information that is output by the AI model is processed; or the like. This is not limited. The label corresponding to the training sample is considered as "correct location information of the UE" corresponding to the training sample. Based on the location information of the UE that is output by the AI model and the "correct location information of the UE", an error between the two is determined. Optionally, the error between the two may be measured by using a loss function. It is determined whether the error between the two is less than a preset threshold (or whether a target requirement is met); and if the error is less than the preset threshold (or the target requirement is met), it is considered that model training is completed. If the error is greater than or equal to the preset threshold (or the target requirement is not met), a parameter of the AI model may be adjusted. For example, the AI model is a neural network learning model. Adjusting a parameter of the AI model includes: adjusting one or more of the following of a neural network: a quantity of layers, a width, a weight of a neuron, a parameter in an activation function of a neuron, or the like. The AI model whose parameter is adjusted may be considered as an AI model obtained in the $1^{st}$ model training. For the AI model whose parameter is adjusted, $2^{nd}$ model training continues. The $2^{nd}$ model training process is similar to the foregoing $1^{st}$ model training process. For example, the $2^{nd}$ model training process includes: determining location information of the UE based on a training sample and a model for the $1^{st}$ model training (the model may continue to be referred to as an AI model); based on the location information that is output by the AI model and a label corresponding to the training sample, determining an error between the two; and if the error between the two is less than the preset threshold (or the target requirement is not met), adjusting a parameter of the AI model, and continuing $3^{rd}$ model training; or if the error between the two is greater than or equal to the preset threshold (or the target requirement is met), completing model training. Optionally, the foregoing training sample may be collected from the UE or the base station. This is not limited. The training sample includes a measurement result, and the measurement result includes all of the first measurement result, and/or all or a part of the second measurement result. This is not limited.

Optionally, the procedure in FIG. 11 further includes: The LMF receives a positioning request from a location request apparatus. The LMF determines first information based on the positioning request, where the first information indicates the first threshold in the first condition. As described above, the first information may be sent by the LMF to the UE. The LMF sends the location information of the UE to the location request apparatus.

The location request apparatus may be a server, or a chip, a circuit, or the like used in the server. For example, if a server of map navigation software wants to learn location information of specific UE, the server may send a positioning request to the LMF, where the positioning request includes an identifier of the UE. Optionally, the positioning request may further include positioning accuracy and the like. The LMF may determine the first threshold in the first condition based on the positioning accuracy. For example, a higher requirement for positioning accuracy indicates that the first threshold may be set to a larger value; or a lower requirement for positioning accuracy indicates that the first threshold may be set to a smaller value. This is not limited. Alternatively, the LMF may determine a positioning mode based on the positioning request, and the LMF determines the first information based on the positioning mode. Optionally, the positioning mode may include a CFR fingerprint positioning mode, a CIR fingerprint positioning mode, an RSRP fingerprint positioning mode, a field-strength fingerprint positioning mode, or the like. Different positioning modes may correspond to different positioning accuracy. The LMF may determine the first threshold and the like based on the positioning mode, and the LMF indicates the first threshold to the UE by using the first information. In a design, the positioning request sent by the positioning request apparatus includes indication information such as the positioning accuracy, and the LMF may determine, based on the indication information, a positioning mode that meets the foregoing positioning accuracy requirement.

Alternatively, the location request apparatus may be UE, or a chip, a circuit, or the like used in the UE. For example, if the UE needs to obtain location information of the UE, the UE may send a positioning request to the LMF. For example, map navigation software is installed in the UE, and if the location information of the UE needs to be obtained, the UE may send the positioning request to the LMF. The LMF triggers downlink positioning or uplink positioning. For example, the LMF triggers downlink positioning. The LMF may indicate the first threshold to the UE, to indicate the base station to send a downlink reference signal. The UE measures the downlink reference signal from the base station, reports all or a part of a measurement result to the LMF based on the first threshold and a determining result of a metric corresponding to the measurement result, determines the location information of the UE based on all or the part of the measurement result reported by the LMF, and then sends the location information of the UE to the UE. This is not limited. Optionally, in this embodiment of this application, the UE may directly send the positioning request to the LMF, or the UE may send the positioning request to a server (for example, a server of the map navigation software), and the server forwards the positioning request to the LMF. For example, the map navigation software installed in the UE needs to obtain the location information of the UE. The UE sends the positioning request to the server corresponding to the map navigation software, and the server corresponding to the map navigation software forwards the positioning request to the LMF.

In this application, the first information may explicitly indicate the first threshold, or implicitly indicate the first threshold, or the like. This is not limited. Optionally, in addition to indicating the first threshold, the first information may further explicitly or implicitly indicate the metric corresponding to the first threshold. In a design, the first condition is that the SINR is greater than 30 dB, the metric is the SINR, and the first threshold is 30 dB. A process in which the LMF indicates the first threshold and/or the metric is described below as an example.

1. The first threshold and the metric that correspond to each positioning mode are predefined, that is, a correspondence between each positioning mode and the first threshold and the metric is predefined. In a design, the LMF may send an identifier of the determined positioning mode to the UE. The UE may determine, based on the identifier of the positioning mode, the metric, the first threshold, and the like that correspond to the identifier of the positioning mode. In this design, the first information may carry indication information of the positioning mode.

2. The first threshold is predefined. For example, a correspondence between the metric and the first threshold is predefined. In a design, after determining the metric, the LMF may indicate the metric to the UE. The UE determines the first threshold based on the metric indicated by the LMF and the correspondence between the metric and the first threshold. In this design, the first information may carry indication information of the metric. Optionally, the first information may further carry indication information of the positioning mode.

3. The metric is predefined. For example, a correspondence between the first threshold and the metric is predefined. In a design, after determining the first threshold, the LMF may indicate the first threshold to the UE. The UE determines the metric based on the first threshold indicated by the LMF and the correspondence between the first threshold and the metric. In this design, the first information may carry indication information of the first threshold. Optionally, the first information may further carry indication information of the positioning mode.

4. Neither the first threshold nor the metric is predefined. The LMF needs to separately indicate the first threshold and the metric to the UE. In this design, the first information may carry indication information of the first threshold and indication information of the metric. For example, the first information may carry two pieces of indication information, and the two pieces of indication information respectively indicate the first threshold and the metric. Alternatively, the first information may carry one piece of indication information, and the one piece of indication information may indicate both the first threshold and the metric. For example, association relationships between different first thresholds and different metrics may be established in advance, and one index is allocated to each first threshold and metric for which an association relationship is established. In this case, the first information may carry the foregoing index.

An example in which the first measurement result or the second measurement result sent by the UE to the LMF is a CFR is used. As shown in FIG. 12, a downlink positioning procedure is provided, including the following steps.

Step 1201: A location requester sends a positioning request to the LMF, where the positioning request includes indication information of a high-accuracy positioning requirement.

For the location requester, refer to the descriptions of the location request apparatus in the foregoing descriptions. Optionally, the location requester may be UE. The positioning request in step 1201 is sent by using an application layer of the UE, or is sent by using a built-in configuration of the UE, or the like. This is not limited.

Step 1202: The LMF determines a CFR fingerprint positioning mode based on the positioning request, and determines a first threshold based on the CFR fingerprint positioning mode, where the first threshold may be an SINR threshold.

Step 1203: The LMF sends first information to the UE, where the first information indicates the SINR threshold.

Step 1204: The LMF sends indication information to the base station, where the indication information indicates the base station to send a downlink reference signal to the UE. In the procedure in FIG. 12, an example in which the downlink reference signal is a PRS is used. In the following descriptions, an example in which the base station periodically sends the PRS to the UE is used. The PRS sent by the base station to the UE in a 1st period is referred to as a PRS 1, and the PRS sent by the base station to the UE in a 2nd period is referred to as a PRS 2.

Step 1205: In the 1st period, the base station sends the PRS 1 to the UE.

Step 1206: The UE measures the PRS 1, and determines a CFR corresponding to the PRS 1. For ease of distinguishing, the CFR corresponding to the PRS 1 may be referred to as a CFR 1. The UE sends all of the CFR 1 to the LMF.

Optionally, the CFR 1 may be a CFR 1 corresponding to all subcarriers of the PRS 1. For example, the PRS 1 occupies 4096 subcarriers in frequency domain. The UE measures a CFR corresponding to each of the 4096 subcarriers. The CFR 1 is the CFR corresponding to the 4096 subcarriers.

Step 1207: The LMF determines location information of the UE based on an AI model and the CFR 1, and stores the location information of the UE and the CFR 1. For ease of distinguishing, the location information of the UE that is determined based on the CFR 1 fed back by the UE is referred to as location information 1 of the UE.

Step 1208: The LMF sends a positioning result to the location requester, where the positioning result includes the location information 1 of the UE.

Step 1209: In the 2nd period, the base station sends the PRS 2 to the UE.

Step 1210: The UE measures the PRS 2, and determines a CFR corresponding to the PRS 2. For ease of distinguishing, the CFR corresponding to the PRS 2 may be referred to as a CFR 2.

Step 1211: The UE determines, based on the SINR threshold indicated by the LMF, an SINR corresponding to the CFR 1, and determines, based on a determining result, the CFR 2 to be reported to the LMF.

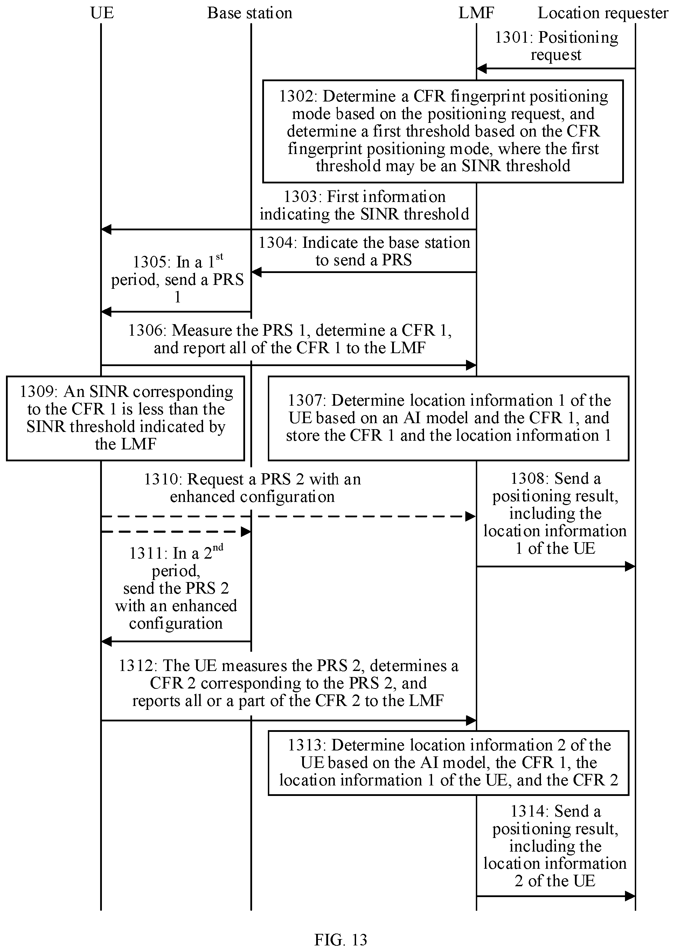

For example, if the SINR corresponding to the CFR 1 is greater than or equal to the SINR threshold indicated by the LMF, it indicates that a capability of representing a location of the UE by a channel measurement result between the UE and the base station is relatively strong. In this case, in positioning in a second period, the UE may feed back a CFR of a coarse sampling granularity to the LMF for positioning. For example, if an SINR measured in a first period is greater than or equal to the SINR threshold indicated by the LMF, the UE may report the CFR 2 of some subcarriers to the LMF. For example, the PRS 2 occupies 4096 subcarriers in frequency domain, the UE may measure the CFR 2 of the PRS 2 at an interval of one subcarrier, and the UE feeds back the CFR 2 of 2048 subcarriers to the LMF. Alternatively, the UE may report the CFR 2 of some antenna ports to the LMF. For a case in which the SINR corresponding to the CFR 1 is less than the SINR threshold indicated by the LMF, refer to the descriptions in FIG. 13.

It may be understood that, in this embodiment of this application, when the SINR of the CFR 1 is greater than or equal to the SINR threshold, the UE reports a part of the CFR 2 to the LMF. In a design, the UE may measure all of the CFR 2. However, in the foregoing case, the UE reports a part of the CFR 2 to the base station. For example, the UE may measure a CFR 2 of 4096 subcarriers, but the UE reports a CFR 2 of 2048 subcarriers to the LMF. Alternatively, the UE may measure a CFR 2 of all antenna ports, but the UE reports a CFR 2 of some antenna ports to the LMF. Alternatively, in another design, the UE may measure a part of the CFR 2, and report the measured part of the CFR 2 to the LMF. For example, the UE may measure a CFR 2 of 2048 subcarriers, and does not measure a corresponding CFR 2 of remaining 2048 subcarriers. For example, in the 4096 subcarriers, the UE may measure a CFR 2 once at an interval of one subcarrier. Alternatively, the UE may measure a CFR 2 of some antenna ports, and does not measure a CFR 2 corresponding to other antenna ports. The UE measures a part of the CFR 2. Compared with measuring all of the CFR 2 by the UE, this can reduce power consumption of the UE.

Step 1212: The UE sends the CFR 2 to the LMF.

Step 1213: The LMF determines location information of the UE based on the AI model, the CFR 1, the location information 1 of the UE, and the CFR 2, where the location information of the UE may be referred to as location information 2 of the UE.

Step 1214: The UE sends a positioning result to the LMF, where the positioning result includes the location information 2 of the UE.

In the foregoing design, an AI model is deployed on an LMF side for downlink positioning. The UE measures a downlink reference signal sent by the base station, and reports a measurement result to the LMF. The LMF performs model inference based on the reported measurement result and the AI model, to determine the location information of the UE. The LMF indicates the SINR threshold to the UE. The UE adaptively adjusts, based on a historical measurement result and the SINR threshold, the measurement result fed back to the LMF. When the historical measurement result of the UE is greater than or equal to the SINR threshold, the UE feeds back a part of the measurement result to the LMF, reducing air interface overheads of the UE. The LMF side uses fewer measurement results to implement positioning.

As shown in FIG. 13, an embodiment of this application provides a downlink positioning procedure. A difference between the procedure and the procedure in FIG. 12 lies in that a case in which the SINR corresponding to the CFR 1 is less than the SINR threshold indicated by the LMF is emphasized in the procedure. The procedure includes the following steps.

Step 1301: A location requester sends a positioning request to the LMF.

Step 1302: The LMF determines a CFR fingerprint positioning mode based on the positioning request, and determines a first threshold based on the CFR fingerprint positioning mode, where the first threshold may be an SINR threshold.

Step 1303: The LMF sends first information to the UE, where the first information indicates the SINR threshold.

Step 1304: The LMF sends indication information to the base station, where the indication information indicates the base station to send a downlink reference signal to the UE.

Step 1305: In a 1st period, the base station sends a PRS 1 to the UE.

Step 1306: The UE measures the PRS 1, determines a CFR 1 corresponding to a PRS 1, and sends all of the CFR 1 to the LMF.

Step 1307: The LMF determines location information 1 of the UE based on an AI model and the CFR 1, and stores the location information 1 of the UE and the CFR 1.

Step 1308: The LMF sends a positioning result to the location requester, where the positioning result includes the location information 1 of the UE.

Step 1309: The UE determines, based on the SINR threshold indicated by the LMF, an SINR corresponding to the CFR 1, and determines, based on a determining result, a CFR 2 reported to the LMF.

For example, if the SINR corresponding to the CFR 1 is less than the SINR threshold indicated by the LMF, it indicates that a capability of representing a location of the UE by a measurement result of measurement of the UE is relatively weak. In this case, the UE requests the base station or the LMF for a PRS 2 with an enhanced configuration, where the PRS 2 with an enhanced configuration meets one or more of the following: an increase in transmit power relative to the PRS 1, an increase in a quantity of antenna ports relative to the PRS 1, or an increase in a time-frequency resource relative to the PRS 1.

It can be understood that the UE may request the LMF for the PRS 2 with an enhanced configuration. When receiving the request, the LMF may indicate the base station to send the PRS 2 with an enhanced configuration to the UE in a 2nd period. Alternatively, the UE requests the base station for the PRS with an enhanced configuration. In this case, in the 2nd period, the base station directly sends the PRS 2 with an enhanced configuration to the UE.

Step 1310: The UE sends a request message to the base station or the LMF, where the request message is used to request the LMF or the base station to configure the PRS 2 with an enhanced configuration for the UE.

Step 1311: In the 2nd period, the base station sends the PRS 2 with an enhanced configuration to the UE.

Step 1312: The UE measures the PRS 2, determines that the PRS 2 corresponds to the CFR 2, and reports all or a part of the CFR 2 to the LMF. For example, the UE reports a CFR 2 of all subcarriers, a CFR 2 of all antenna ports, or the like of the PRS 2 to the LMF. This is not limited.

Step 1313: The LMF determines location information of the UE based on the AI model, the CFR 1, the location information 1 of the UE, and the CFR 2, where the location information of the UE may be referred to as location information 2 of the UE.

Step 1314: The UE sends a positioning result to the LMF, where the positioning result includes the location information 2 of the UE.

In the foregoing design, an AI model is deployed on an LMF side for downlink positioning. The UE measures a downlink reference signal sent by the base station, and reports a measurement result to the LMF. The LMF performs model inference based on the reported measurement result and the AI model, to determine the location information of the UE. The LMF indicates the SINR threshold to the UE. The UE requests the base station or the LMF for a downlink reference signal with an enhanced configuration by using a historical measurement result and the SINR threshold. The UE obtains a measurement result with higher accuracy based on the downlink reference signal with an enhanced configuration, so as to implement high-accuracy positioning of the UE.

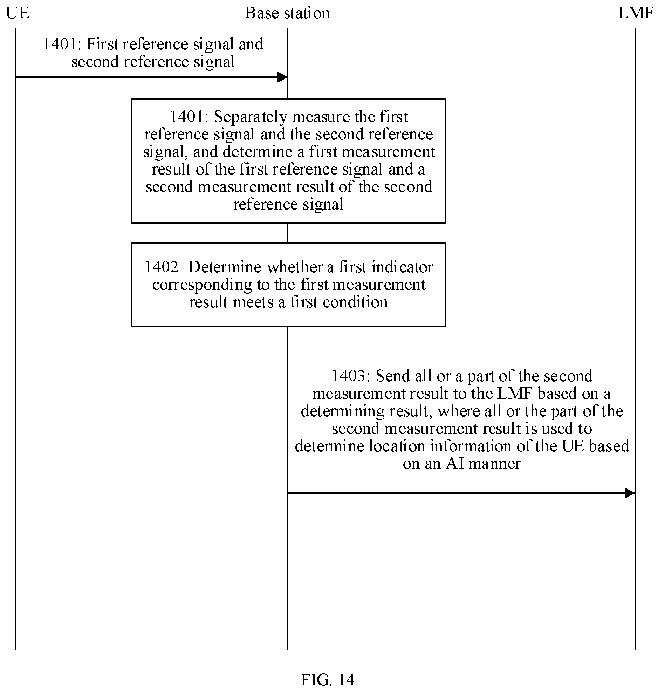

As shown in FIG. 14, an example in which the first solution is applied to uplink positioning, the first communication apparatus is a base station, the second communication apparatus is UE, and the location management apparatus is an LMF is used. An uplink positioning procedure is provided, including the following steps.

Step 1401: The base station separately measures a first reference signal and a second reference signal from the UE, and determines a first measurement result of the first reference signal and a second measurement result of the second reference signal.

In uplink positioning, the first reference signal and the second reference signal are uplink reference signals, for example, SRSs. Optionally, the first measurement result is a CFR, a CIR, or RSRP, and the second measurement result is a CFR, a CIR, RSRP, or the like. This is not limited.

Step 1402: The base station determines whether a first metric corresponding to the first measurement result meets a first condition.

For example, the UE determines the first metric based on the first measurement result, where the first metric includes one or more of the following: an SINR, first path power, RSRP, or the like. The first condition includes a first threshold, and the first threshold includes one or more of the following: an SINR threshold, a first path power threshold, an RSRP threshold, or the like. The first condition may be specifically that the first metric is greater than or equal to (or greater than) the first threshold. In other words, when the first metric is greater than or equal to (or greater than) the first threshold, a determining result is that the first metric meets the first condition. Alternatively, when the first metric is less than (or less than or equal to) the first threshold, a determining result is that the first metric does not meet the first condition.

Optionally, the first threshold may be specified in a protocol, or may be preset, or may be configured by the base station, the LMF, or the like for the base station, or the like. This is not limited. For example, the LMF configures the first threshold for the base station. The method may further include: The base station receives first information from the LMF, where the first information indicates the first threshold in the first condition.

Step 1403: The base station sends all or a part of the second measurement result to the LMF based on the determining result, where all or the part of the second measurement result is used to determine location information of the UE based on an AI manner.

In a design, the determining result is that the first metric meets the first condition, and the base station sends the part of the second measurement result to the LMF. For example, when the determining result meets the first condition, that is, when the first metric corresponding to the first measurement result is greater than or equal to the first threshold, it indicates that a capability of representing a location of the UE by the measurement result is relatively strong. In this case, the base station may send the part of the second measurement result to the LMF. The part of the second measurement result may be a second measurement result of some transmit antenna ports or some receive antenna ports, a second measurement result of some subcarriers, or the like. This is not limited. In an implementation, the base station measures average power of receiving the second reference signal by each antenna port, and sends, to the LMF, a second measurement result corresponding to an antenna port whose average power is greater than a threshold.

Alternatively, the base station sends first configuration information to the UE, where the first configuration information is used to configure the UE to receive the second reference signal with a reduced configuration. Optionally, the second reference signal with a reduced configuration meets one or more of the following: a reduction in transmit power relative to the first reference signal, a reduction in a quantity of antenna ports relative to the first reference signal, or a reduction in a time-frequency resource relative to the first reference signal, or the like. Then, the base station sends all or the part of the second measurement result of the second reference signal with a reduced configuration to the LMF.

In the foregoing design, when the first metric corresponding to the first measurement result of measurement of the base station is greater than or equal to the first threshold, the base station reduces a configuration for the second reference signal. The second reference signal with a reduction includes one or more of the following: a reduction in a time-frequency resource relative to the first reference signal, a reduction in a quantity of antenna ports relative to the first reference signal, a reduction in transmit power relative to the first reference signal, or the like. The UE sends the second reference signal with a reduced configuration to the base station based on the foregoing configuration. The base station measures the second reference signal with a reduced configuration, and determines the second measurement result. In this embodiment of this application, the base station may send all or the part of the second measurement result to the LMF. This is not limited. For example, in an implementation, the base station may send all of the second measurement result to the LMF. This design is different from the previous design. In the previous design, when the determining result meets the first condition, the base station directly sends the part of the second measurement result to the LMF, without changing the configuration of the second reference signal. In other words, in the foregoing design, it may be considered that configurations of the first reference signal and the second reference signal are the same. In the foregoing design, because the base station sends the part of the second measurement result to the LMF, overheads of transmission between the base station and the LMF can be reduced. However, a difference in this design is that the base station configures the UE to send the second reference signal with a reduced configuration relative to the first reference signal, and the base station sends all or the part of the second measurement result of the second reference signal with a reduced configuration to the LMF. For example, the base station may configure the UE to send a 4-comb (comb) first reference signal, where 4-comb means that frequency domain resources of a specified size are allocated to four UEs for use, and each UE occupies 1/4 of the frequency domain resources. If the determining result of the base station is that the first metric of the first reference signal is greater than or equal to the first threshold, the base station may configure the UE to send an 8-comb second reference signal, where 8-comb means that frequency domain resources of a specified size are allocated to eight UEs for use, and each UE occupies 1/8 of the frequency domain resources. In this design, because the UE sends the second reference signal with a reduced configuration to the base station, overheads of an air interface between the UE and the base station can be reduced, power consumption of the UE can be reduced, and the like. In addition, because the second reference signal is a reduced configuration relative to the first reference signal, air interface overheads of the second measurement result corresponding to the second reference signal are usually small. Therefore, overheads of transmission between the base station and the LMF can also be reduced by using the foregoing design.

In another design, if the determining result is that the first measurement result does not meet the first condition, the base station sends all of the second measurement result to the LMF. Alternatively, the base station sends second configuration information to the UE, where the second configuration information is used to configure the second reference signal with an enhanced configuration. Optionally, in this embodiment of this application, the second reference signal may be the second reference signal with an enhanced configuration. The second reference signal with an enhanced configuration meets one or more of the following: an increase in transmit power relative to the first reference signal, an increase in a quantity of antenna ports relative to the first reference signal, or an increase in a time-frequency resource relative to the first reference signal. The UE sends the second reference signal with an enhanced configuration to the base station based on the configuration of the second configuration information. The base station measures the second reference signal with an enhanced configuration, and determines the second measurement result; and the base station sends all or the part of the second measurement result to the LMF.

According to the foregoing design, when the determining result is that the first measurement result does not meet the first condition, it indicates that a capability of representing a location of the UE by the measurement result of the UE is relatively weak, and the base station may report all of the second measurement result to the LMF. Alternatively, the base station configures the UE to send the second reference signal with an enhanced configuration relative to the first reference signal, where the measurement result corresponding to the second reference signal with an enhanced configuration is usually more capable of representing a location of the UE; the base station reports the second measurement result of the second reference signal with an enhanced configuration to the LMF; and the LMF infers location information of the UE with higher accuracy based on the second measurement result.

Optionally, when the first reference signal is an initial period or an initial reference signal, the method further includes: The base station sends all of the first measurement result of the first reference signal to the LMF. For the initial period or the initial reference signal, refer to the descriptions of the downlink positioning procedure. A difference from the downlink positioning procedure is that, in the uplink positioning procedure, the UE sends an uplink reference signal to the base station. If the UE periodically sends an uplink reference signal to the base station, a reference signal in the initial period is an uplink reference signal sent by the UE to the base station in a $1^{st}$ period. Optionally, the UE sends one or more uplink reference signals to the base station in each period. This is not limited. Alternatively, in this application, whether the UE periodically sends an uplink reference signal to the base station is not limited. The initial reference signal is an initial reference signal sent by the UE to the base station when the UE accesses the base station, or is an initial reference signal sent, when the UE accesses a cell in the base station and the cell is used as a serving cell of the UE, by the UE to the base station by using the serving cell, or is an initial reference signal sent by the UE to the base station in a time period, or is an initial reference signal sent after an indication from a base station side is received, or the like. This is not limited.

In a design, when the first measurement result or the second measurement result is RSRP, an implementation includes: In $1^{st}$ measurement, the UE separately sends an uplink reference signal to X base stations, and each of the X base stations measures the uplink reference signal sent by the UE, to determine a corresponding measurement result, where the measurement result includes RSRP. The X base stations separately report corresponding measurement results to the LMF. If the LMF finds that measurement results reported by Z base stations in the X base stations are greater than or equal to the RSRP threshold, in $2^{nd}$ measurement, the LMF may indicate Y base stations in the Z base stations to report measurement results, and another base station may not report a measurement result. Optionally, a manner of selecting the Y base stations from the Z base stations is not limited. For example, the Y base stations may be randomly selected from the Z base stations, or the Y base stations whose measurement result values rank top may be selected, or the Y base stations may be selected based on another algorithm. This is not limited.

Step 1404: The LMF determines location information of the UE based on an AI model and all or the part of the second measurement result.

In a design, all or the part of the second measurement result is used as or is used to determine an input of the AI model, and an output of the AI model is used as or is used to determine the location information of the UE. For a process in which the LMF infers the location information of the UE based on the AI model and all or the part of the second measurement result, refer to the descriptions in the foregoing downlink positioning procedure.

Optionally, the method further includes: The LMF receives a positioning request from a location request apparatus. The LMF determines, based on the positioning request, first information indicating the first threshold in the first condition. The LMF sends the location information of the UE to the location request apparatus. Optionally, a process in which the LMF determines first information based on the positioning request includes: The LMF determines a positioning mode based on the positioning request, and the LMF determines the first information based on the positioning mode; or the like. For a specific process, refer to the descriptions in the foregoing downlink positioning procedure. Details are not described herein again.

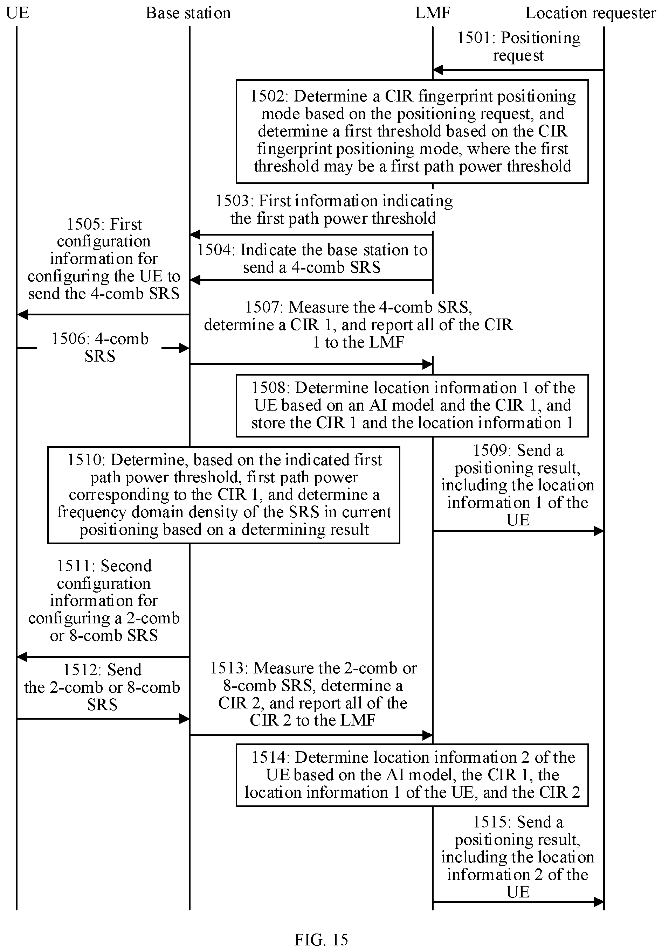

An example in which the first measurement result or the second measurement result sent by the base station to the LMF is a CIR is used. As shown in FIG. 15, an uplink positioning procedure is provided, including the following steps.

Step 1501: A location requester sends a positioning request to the LMF, where the positioning request includes indication information of a high-accuracy positioning requirement.

Step 1502: The LMF determines a CIR fingerprint positioning mode based on the positioning request, and determines a first threshold based on the CIR fingerprint positioning mode, where the first threshold may be a first path power threshold.

Step 1503: The LMF sends first information to the base station, where the first information indicates the first path power threshold.

Step 1504: The LMF sends indication information to the base station, where the indication information indicates the base station to configure the UE to send a 4-comb uplink reference signal. In the procedure in FIG. 15, an example in which the uplink reference signal is an SRS is used.

Step 1505: The base station sends first configuration information to the UE, where the first configuration information is used to configure the UE to send the 4-comb SRS.

Step 1506: The UE sends the 4-comb SRS to the base station based on the configuration of the first configuration information.

Step 1507: The base station measures the 4-comb SRS; determines a first measurement result, where the first measurement result may be referred to as a CIR 1; and reports all of the CIR 1 of measurement to the LMF.

Step 1508: The LMF determines location information 1 of the UE based on an AI model and the CIR 1, and stores the CIR 1 and the location information 1 of the UE.

Step 1509: The LMF sends a positioning result to the positioning requester, where the positioning result includes the location information 1 of the UE.

Step 1510: The base station determines, based on the first path power threshold indicated by the LMF, first path power corresponding to the CIR 1, and determines a frequency domain density of the SRS in current positioning based on a determining result.

In a design, if the first path power corresponding to the CIR 1 is greater than or equal to the first path power threshold indicated by the LMF, it indicates that a capability of representing a location of the UE by a measurement result of the base station is relatively strong. In this case, the frequency domain density of the SRS configured by the base station for the UE in current positioning may be less than a frequency domain density of an SRS configured for the UE in previous positioning (the frequency domain density of the SRS in previous positioning is a 4-comb SRS). In the procedure in FIG. 15, in current positioning, an example in which the base station configures an 8-comb SRS for the UE is used for description.

In another design, if the first path power corresponding to the CIR 1 is less than the first path power threshold indicated by the LMF, it indicates that a capability of representing a location of the UE by a measurement result of the base station is relatively weak. In this case, the frequency domain density of the SRS configured by the base station for the UE in current positioning may be greater than a frequency domain density of an SRS configured for the UE in previous positioning. In the procedure in FIG. 15, in current positioning, an example in which the base station configures a 2-comb SRS for the UE is used for description. The 2-comb SRS may mean that specified frequency domain resources are allocated to two UEs for use, and each UE occupies 1/2 of the frequency domain resources.

Step 1511: The base station sends second configuration information to the UE, where the second configuration information is used to configure the UE to send a 2-comb or 8-comb SRS.

It may be understood that, in step 1511, when the first path power measured in the 1st period is greater than or equal to the first path power threshold, the base station configures the 8-comb SRS for the UE; or when the first path power measured in the 1st period is less than the first path power threshold, the base station configures the 2-comb SRS for the UE.

Step 1512: The UE sends the 2-comb or 8-comb SRS to the base station based on the second configuration information.

Step 1513: The base station measures the 2-comb or 8-comb SRS, determines a CIR 2, and reports all of the CIR 2 to the LMF.

Step 1514: The LMF determines location information 2 of the UE based on the location information 1 of the UE, the CIR 1, the CIR 2, and the AI model.

Step 1515: The LMF sends a positioning result to the location requester, where the positioning result includes the location information 2 of the UE.

According to the foregoing design, an AI model is deployed on an LMF side for uplink positioning. The LMF indicates the first path power threshold to the base station, and the base station adaptively adjusts, based on the first path power threshold indicated by the LMF and a historical measurement result, the frequency domain density of the SRS sent by the UE to the base station. When first path power historically measured by the base station is greater than or equal to the first path power threshold, the base station configures an SRS with a lower frequency domain density for the UE. Overheads of sending a measurement result of an SRS with a low frequency domain density by the base station to the LMF are usually less than overheads of measurement information of an SRS with a high frequency domain density, so that overheads of sending a measurement result by the base station to the LFM are reduced. Alternatively, when the first path power historically measured by the base station is less than the first path power threshold, the base station configures an SRS with a high frequency domain density for the UE, and the base station sends a measurement result of the SRS with a high frequency domain density to the LMF, so that the LMF performs high-accuracy positioning on the UE.

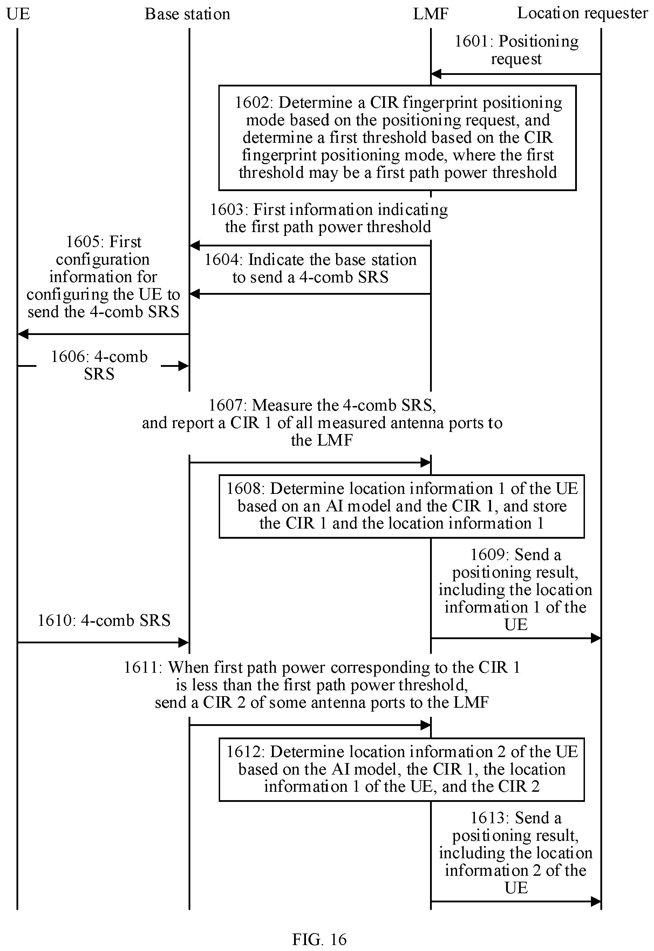

As shown in FIG. 16, an embodiment of this application further provides an uplink positioning procedure. A main difference between the procedure and that in FIG. 15 is that, in 1st positioning, the base station sends a CIR 1 of all antenna ports to the LMF; and in 2nd positioning, when first path power corresponding to the CIR 1 is greater than or equal to the first path power threshold indicated by the LMF, the base station sends a CIR 2 of some antenna ports to the LMF. The procedure includes at least the following steps.

Step 1601: A location requester sends a positioning request to the LMF, where the positioning request includes indication information of a high-accuracy positioning requirement.

Step 1602: The LMF determines a CIR fingerprint positioning mode based on the positioning request, and determines a first threshold based on the CIR fingerprint positioning mode, where the first threshold may be a first path power threshold.

Step 1603: The LMF sends first information to the base station, where the first information indicates the first path power threshold.

Step 1604: The LMF sends indication information to the base station, where the indication information indicates the base station to configure the UE to send a 4-comb uplink reference signal. In the procedure in FIG. 16, an example in which the uplink reference signal is an SRS is used.

Step 1605: The base station sends first configuration information to the UE, where the first configuration information is used to configure the UE to send the 4-comb SRS.

Step 1606: The UE sends the 4-comb SRS to the base station based on the configuration of the first configuration information.

Step 1607: The base station measures the 4-comb SRS, and reports the CIR 1 of all the measured antenna ports to the LMF.

Step 1608: The LMF determines location information 1 of the UE based on an AI model and the CIR 1, and stores the CIR 1 and the location information 1 of the UE.

Step 1609: The LMF sends a positioning result to the positioning requester, where the positioning result includes the location information 1 of the UE.

Step 1610: The UE sends the 4-comb SRS to the base station based on the configuration of the first configuration information.

Step 1611: The base station determines first path power of the CIR 1 based on the first path power threshold indicated by the LMF, and determines, based on a determining result, a CIR 2 fed back to the LMF in current positioning.

In a design, if the first path power corresponding to the CIR 1 is greater than or equal to the first path power threshold indicated by the LMF, it indicates that a capability of representing a location of the UE by a measurement result of the base station is relatively strong. In this case, in current positioning, the base station sends a CIR 2 of some antenna ports to the LMF. The some antenna ports may be some antenna ports whose power for receiving an SRS by the base station is greater than or equal to preset power, or the antenna ports of the base station are sorted based on power for receiving an SRS. The base station feeds back, to the LMF, a CIR 2 of first 1/2 of the antenna ports with high receive power. In the flowchart of FIG. 16, the process is emphasized.

In another design, if the first path power corresponding to the CIR 1 is less than the first path power threshold indicated by the LMF, it indicates that a capability of representing a location of the UE by a measurement result of the base station is relatively weak. In this case, in current positioning, the base station may feed back a CIR 2 of all antenna ports to the LMF. Alternatively, same as the process in FIG. 15, the base station sends second configuration information to the UE, where the second configuration information is used to configure the UE to send a 2-comb SRS or the like.

Step 1612: The LMF determines location information 2 of the UE based on the location information 1 of the UE, the CIR 1, the CIR 2, and the AI model.

Step 1613: The UE sends a positioning result to the location requester, where the positioning result includes the location information 2 of the UE.

According to the foregoing design, an AI model is deployed on an LMF side for uplink positioning. The LMF indicates the first path power threshold to the base station, and the base station adaptively adjusts, based on the first path power threshold indicated by the LMF and a historical measurement result, a measurement result fed back to the LMF. For example, when first path power historically measured is less than the first path power indicated by the LMF, the base station feeds back a part of the measurement result to the LMF, so that transmission overheads are reduced.

It may be understood that, in this application:

1. In each procedure, differences between different procedures are emphasized. For descriptions of different procedures, refer to each other.

2. A sequence of performing the steps in the procedure is not limited. For example, in the procedure in FIG. 12, step 1211 may alternatively be performed before step 1209 and step 1210. In other words, in the 1st period, the UE may determine whether the SINR corresponding to the CFR 1 is greater than or equal to the SINR threshold, and determine that the UE sends all or the part of the CFR 2 to the LMF in the 2nd period. In the 2nd period, the UE measures the PRS 2 sent by the base station, and determines the CFR 2 corresponding to the PRS 2; and the UE reports all or the part of the PSR 2 to the base station based on the determining result in the 1st period. This is not limited.

3. The following describes "indication": The indication may explicitly indicate corresponding information, or implicitly indicate corresponding information, or the like. This is not limited. For example, in the descriptions of this application, the first information indicates the first threshold. The first information may explicitly indicate the first threshold. For example, the first information carries the first threshold. Alternatively, the first information may implicitly indicate the first threshold. For example, the first information carries an identifier, indication information, or the like corresponding to the first threshold, and the identifier, the indication information, or the like may implicitly or indirectly indicate the first threshold or the like.

4. An application scenario of the positioning method provided in this application is not limited. The positioning method is applied to a wireless communication system, and positioning of the UE is merely an example for description. For example, the positioning method provided in this application may be further applied to a Wi-Fi system, and a terminal or the like in the Wi-Fi system may be positioned by using the positioning method.

It may be understood that, to implement the functions in the foregoing embodiments, the UE, the base station, the LMF, the location requester, or the like includes a corresponding hardware structure and/or software module for performing each function. A person skilled in the art should be easily aware that, in combination with units and method steps of the examples described in embodiments disclosed in this application, this application may be implemented by using hardware or a combination of hardware and computer software. Whether a function is performed by hardware or hardware driven by computer software depends on particular application scenarios and design constraints of the technical solutions.

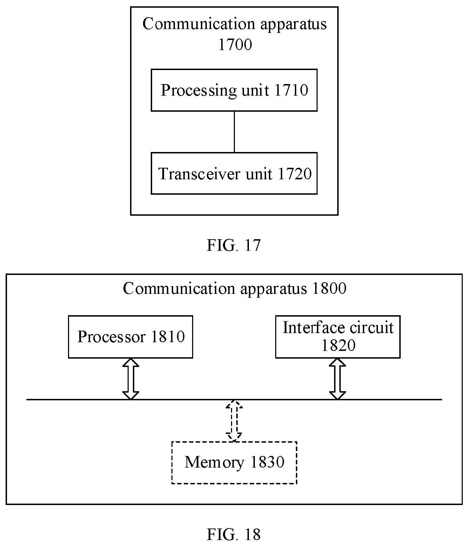

FIG. 17 and FIG. 18 are diagrams of structures of possible communication apparatuses according to embodiments of this application. These communication apparatuses may be configured to implement one or more corresponding functions in the foregoing method embodiments, for example, a function implemented by one or more of the UE, the base station, the LMF, or the location requester. Therefore, beneficial effects of the foregoing method embodiments may be implemented.

As shown in FIG. 17, a communication apparatus 1700 includes a processing unit 1710 and a transceiver unit 1720. The communication apparatus 1700 is configured to implement one or more functions in the foregoing method embodiments, for example, the function implemented by one or more of the UE, the base station, the LMF, or the location requester.

For example, in downlink positioning, when the communication apparatus 1700 is configured to implement the functions of the UE in FIG. 11, FIG. 12, or FIG. 13: the transceiver unit 1720 is configured to: separately measure a first reference signal and a second reference signal from a base station, and determine a first measurement result of the first reference signal and a second measurement result of the second reference signal; and the processing unit 1710 is configured to: determine whether a first metric corresponding to the first measurement result meets a first condition; and control, based on a determining result, the transceiver unit 1720 to send all or a part of the second measurement result to a location management apparatus, where all or the part of the second measurement result is used to determine location information of the communication apparatus or the base station based on an artificial intelligence AI manner.

For example, in uplink positioning, when the communication apparatus 1700 is configured to implement the functions of the base station in FIG. 14, FIG. 15, or FIG. 16: the transceiver unit 1720 is configured to: separately measure a first reference signal and a second reference signal from a terminal, and determine a first measurement result of the first reference signal and a second measurement result of the second reference signal; and the processing unit 1710 is configured to: determine whether a first metric corresponding to the first measurement result meets a first condition; and control, based on a determining result, the transceiver unit 1720 to send all or a part of the second measurement result to a location management apparatus, where all or the part of the second measurement result is used to determine location information of the communication apparatus or the terminal based on an artificial intelligence AI manner.

In a design, when the communication apparatus 1700 is configured to implement the functions of the base station in FIG. 11 to FIG. 16: the transceiver unit 1720 is configured to send first configuration information to UE, where the first configuration information is used to configure a first reference signal; and the transceiver unit 1720 is further configured to send second configuration information to the UE, where the second configuration information is used to configure the second reference signal with a reduced configuration or the second reference signal with an enhanced configuration.

In a design, when the communication apparatus 1700 is configured to implement the functions of the LMF in FIG. 11 to FIG. 16: the transceiver unit 1720 is configured to: send first information to a first communication apparatus, where the first information indicates a first threshold in a first condition, the first condition is used to determine a first measurement result of a first reference signal, and a determining result is used to determine to report all or a part of a second measurement result of a second reference signal; and receive all or the part of the second measurement result of the second reference signal from the first communication apparatus; and the processing unit 1710 is configured to determine location information of the first communication apparatus or a second communication apparatus based on an artificial intelligence AI model and all or the part of the second measurement result. Optionally, in downlink positioning, the first communication apparatus is UE, or a chip or a circuit used in the UE. In uplink positioning, the first communication apparatus is a base station, or a chip, a circuit, or the like used in the base station.

In a design, when the communication apparatus 1700 is configured to implement functions of the location requester in FIG. 12, FIG. 13, FIG. 15, or FIG. 16, the transceiver unit 1720 is configured to: send a positioning request to a location management apparatus; and receive location information of a first communication apparatus or a second communication apparatus from the location management apparatus. Optionally, the location request apparatus is an LMF, or a chip, a circuit, or the like used in the LMF. This is not limited.

For more detailed descriptions of the processing unit 1710 and the transceiver unit 1720, directly refer to the related descriptions in the foregoing method embodiments. Details are not described herein again.

As shown in FIG. 18, a communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, or store input data required by the processor 1810 to run the instructions, or store data generated after the processor 1810 runs the instructions. Optionally, the processor 1810 may be configured to implement one or more functions in the foregoing method embodiments.

Specifically, the processor 1810 may execute the instructions in the memory 1830, so that the communication apparatus 1800 implements one or more functions in the foregoing method embodiments, for example, functions implemented by one or more of the UE, the base station, the LMF, or the location requester.

When the communication apparatus 1800 is configured to implement the methods shown in FIG. 11 to FIG. 16, the processor 1810 is configured to implement a function of the processing unit 1710, and the interface circuit 1820 is configured to implement a function of the transceiver unit 1720.

When the communication apparatus is a terminal or a chip used in the terminal, the terminal or the terminal chip may implement the functions of the UE in the foregoing method embodiments. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

When the communication apparatus is a base station or a module used in the base station, the base station or the base station module may implement the functions of the base station in the foregoing method embodiments. The base station module receives information from another module (for example, a radio frequency module or an antenna) in the base station, where the information is sent by a terminal to the base station, or the base station module sends information to another module (for example, a radio frequency module or an antenna) in the base station, where the information is sent by the base station to a terminal. The base station module herein may be a baseband chip in the base station, or may be a DU or another module. The DU herein may be a DU in an open radio access network (open radio access network, O-RAN) architecture.

When the communication apparatus is an LMF or a module used in the LMF, the LMF or the LMF module implements the functions of the LMF in the foregoing method embodiments. The LMF module receives information from another module (for example, a radio frequency module or an antenna) in the LMF, where the information is sent by a terminal or a base station to the LMF module, or the LMF module sends information to another module (for example, a radio frequency module or an antenna) in the LMF, where the information is sent by the LMF to a terminal or a base station. The LMF module herein may be a baseband chip in the LMF, or may be another module or the like. This is not limited.

When the communication apparatus is a location requester or a module used in the location requester, the location requester or the location requester module may implement the functions of the location requester in the foregoing method embodiments. The location requester module may receive information from another module (for example, a radio frequency module or an antenna), where the information may be sent by an LMF to the location requester module; or the location requester module may send information to another module (for example, a radio frequency module or an antenna) in the location requester, where the information may be sent by an LMF. The location requester module herein may be a baseband chip in the location requester, or may be another module or the like. This is not limited.

It may be understood that, in addition to an apparatus in wireless communication or a chip used in the apparatus, for example, the foregoing base station, terminal, or LMF, the communication apparatus may be an apparatus that undertakes one or more functions of a base station, a terminal, an LMF, or the like in another communication system such as a Wi-Fi communication system. This is not limited in this application. For example, in the Wi-Fi communication system, the apparatus that undertakes functions of the base station may be an access node, or a chip or a circuit used in the access node. The apparatus that undertakes functions of the terminal may be a terminal, or a chip, a circuit, or the like used in the terminal.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in the communication apparatus as discrete components.

All or some of the foregoing embodiments may be implemented by using software, hardware, firmware, or any combination thereof. When software is used to implement embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logical conflict occurs, terms and/or descriptions in different embodiments are consistent and may be referenced by each other. Technical features in different embodiments may be combined to form new embodiments based on internal logical relationships.

In this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, a character "/" indicates an "or" relationship between the associated objects. In a formula in this application, the character "/" indicates a "division" relationship between the associated objects. In addition, "including at least one of A, B, and C" may represent: including A; including B; including C; including A and B; including A and C; including B and C; and including A, B, and C.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A positioning method, comprising:

    separately measuring, by a first communication apparatus, a first reference signal and a second reference signal from a second communication apparatus, and determining a first measurement result of the first reference signal and a second measurement result of the second reference signal;
    determining, by the first communication apparatus, whether a first metric corresponding to the first measurement result meets a first condition; and
    sending, by the first communication apparatus, all or a part of the second measurement result to a location management apparatus based on a determining result, wherein all or the part of the second measurement result is used to determine location information of the first communication apparatus or the second communication apparatus based on an artificial intelligence AI manner.

2.  The method according to claim 1, further comprising:

    receiving, by the first communication apparatus, first information from the location management apparatus or the second communication apparatus, wherein the first information indicates a first threshold in the first condition.

3. The method according to claim 2, wherein the first threshold comprises one or more of the following: a signal to interference plus noise ratio SINR threshold, a first path power threshold, or a reference signal received power RSRP threshold.

4. The method according to any one of claims 1 to 3, wherein the first measurement result or the second measurement result comprises a channel frequency response CFR, a channel impulse response CIR, or RSRP.

5. The method according to any one of claims 1 to 4, wherein that all or the part of the second measurement result is used to determine location information of the first communication apparatus or the second communication apparatus based on an AI manner comprises:
   all or the part of the second measurement result is used as or is used to determine an input of an AI model, and an output of the AI model is used as or is used to determine the location information of the first communication apparatus or the second communication apparatus.

6. The method according to any one of claims 1 to 5, wherein the sending, by the first communication apparatus, all or a part of the second measurement result to a location management apparatus based on a determining result comprises:

   the first metric corresponding to the first measurement result meets the first condition; and
   sending, by the first communication apparatus, the part of the second measurement result to the location management apparatus.

7. The method according to any one of claims 1 to 5, wherein the sending, by the first communication apparatus, all or a part of the second measurement result to a location management apparatus based on a determining result comprises:

   the first metric corresponding to the first measurement result meets the first condition;
   sending, by the first communication apparatus, first configuration information to the second communication apparatus, or receiving, by the first communication apparatus, first configuration information from the second communication apparatus, wherein the first configuration information is used to configure the second reference signal with a reduced configuration; and
   sending, by the first communication apparatus, all or the part of the second measurement result to the location management apparatus.

8. The method according to claim 7, wherein the second reference signal with a reduced configuration meets one or more of the following:
   a reduction in transmit power relative to the first reference signal, a reduction in a quantity of antenna ports relative to the first reference signal, or a reduction in a time-frequency resource relative to the first reference signal.

9. The method according to any one of claims 1 to 5, wherein the sending, by the first communication apparatus, all or a part of the second measurement result to a location management apparatus based on a determining result comprises:

   the first metric corresponding to the first measurement result does not meet the first condition; and
   sending, by the first communication apparatus, all of the second measurement result to the location management apparatus.

10. The method according to any one of claims 1 to 5, or 9, further comprising:

   the first metric corresponding to the first measurement result does not meet the first condition;
   sending, by the first communication apparatus, request information to the second communication apparatus or the location management apparatus, wherein the request information is used to request an enhanced configuration for the second reference signal; and
   receiving, by the first communication apparatus, second configuration information from the second communication apparatus or the location management apparatus, wherein the second configuration information is used to configure the second reference signal with an enhanced configuration.

11. The method according to any one of claims 1 to 5, or 9, further comprising:
   sending, by the first communication apparatus, second configuration information to the second communication apparatus, wherein the second configuration information is used to configure the second reference signal with an enhanced configuration.

12. The method according to any one of claims 1 to 5, 9, 10, or 11, wherein the second reference signal is the second reference signal with an enhanced configuration.

13. The method according to any one of claims 10 to 12, wherein the second reference signal with an enhanced configuration meets one or more of the following:
an increase in transmit power relative to the first reference signal, an increase in a quantity of antenna ports relative to the first reference signal, or an increase in a time-frequency resource relative to the first reference signal.

14. The method according to any one of claims 1 to 13, wherein the first reference signal is an initial period or an initial reference signal, and the method further comprises:
sending, by the first communication apparatus, all of the first measurement result of the first reference signal to the location management apparatus.

15. A positioning method, comprising:

sending, by a second communication apparatus, first configuration information to a first communication apparatus, wherein the first configuration information is used to configure a first reference signal; and
sending, by the second communication apparatus, second configuration information to the first communication apparatus, wherein the second configuration information is used to configure the second reference signal with a reduced configuration or the second reference signal with an enhanced configuration.

16. The method according to claim 15, wherein the second reference signal with a reduced configuration comprises one or more of the following:
a reduction in transmit power relative to the first reference signal, a reduction in a quantity of antenna ports relative to the first reference signal, or a reduction in a time-frequency resource relative to the first reference signal.

17. The method according to claim 15, wherein the second reference signal with an enhanced configuration meets one or more of the following:
an increase in transmit power relative to the first reference signal, an increase in a quantity of antenna ports relative to the first reference signal, or an increase in a time-frequency resource relative to the first reference signal.

18. The method according to any one of claims 15 to 17, further comprising:
receiving, by the second communication apparatus, first information from a location management apparatus, wherein the first information indicates a first threshold in a first condition, and the first condition is used to determine a first measurement result of the first reference signal.

19. The method according to claim 18, wherein the first threshold comprises one or more of the following: a signal to interference plus noise ratio SINR threshold, a first path power threshold, or reference signal received power RSRP threshold.

20. A positioning method, comprising:

sending, by a location management apparatus, first information to a first communication apparatus, wherein the first information indicates a first threshold in a first condition, the first condition is used to determine a first measurement result of a first reference signal, and a determining result is used to determine to report all or a part of a second measurement result of a second reference signal;
receiving, by the location management apparatus, all or the part of the second measurement result of the second reference signal from the first communication apparatus; and
determining, by the location management apparatus, location information of the first communication apparatus or a second communication apparatus based on an artificial intelligence AI model and all or the part of the second measurement result.

21. The method according to claim 20, wherein the first reference signal is an initial period or an initial reference signal, and the method further comprises:

receiving, by the location management apparatus, all of the first measurement result of the first reference signal from the first communication apparatus; and
determining, by the location management apparatus, first location information of the first communication apparatus or the second communication apparatus based on all of the first measurement result and the AI model.

22. The method according to claim 21, wherein the determining, by the location management apparatus, location information of the first communication apparatus or a second communication apparatus based on an AI model and all or the part of the second measurement result comprises:

   determining, by the location management apparatus, an input of the AI model based on all of the first measurement result, the first location information, and all or the part of the second measurement result; and
   determining, by the location management apparatus, second location information of the first communication apparatus or the second communication apparatus based on the AI model and the input of the AI model.

23. The method according to any one of claims 20 to 22, further comprising:

   receiving, by the location management apparatus, a request message from the first communication apparatus, wherein the request message is used to request an enhanced configuration for the second reference signal; and
   sending, by the location management apparatus, second configuration information to the first communication apparatus, wherein the second configuration information is used to configure the second reference signal with an enhanced configuration; or
   sending, by the location management apparatus, indication information to the second communication apparatus, wherein the indication information indicates the second communication apparatus to configure the second reference signal with an enhanced configuration for the first communication apparatus.

24. The method according to any one of claims 20 to 23, wherein the second reference signal is the second reference signal with an enhanced configuration.

25. The method according to claim 23 or 24, wherein the second reference signal with an enhanced configuration meets one or more of the following:
   an increase in transmit power relative to the first reference signal, an increase in a quantity of antenna ports relative to the first reference signal, or an increase in a time-frequency resource relative to the first reference signal.

26. The method according to any one of claims 20 to 25, further comprising:

   receiving, by the location management apparatus, a positioning request from a location request apparatus;
   determining, by the location management apparatus, the first information based on the positioning request; and
   sending, by the location management apparatus, the location information of the first communication apparatus or the second communication apparatus to the location request apparatus.

27. The method according to claim 26, wherein the determining, by the location management apparatus, the first information based on the positioning request comprises:

   determining, by the location management apparatus, a positioning mode based on the positioning request; and
   determining, by the location management apparatus, the first information based on the positioning mode.

28. A positioning method, comprising:

   sending, by a location request apparatus, a positioning request to a location management apparatus; and
   receiving, by the location request apparatus, location information of a first communication apparatus or a second communication apparatus from the location management apparatus.

29. A communication apparatus, comprising a unit configured to perform the method according to any one of claims 1 to 14, or a unit configured to perform the method according to any one of claims 15 to 19, or a unit configured to perform the method according to any one of claims 20 to 27, or a unit configured to perform the method according to claim 28.

30. A communication apparatus, comprising a processor, wherein the processor is configured to execute instructions, so that the communication apparatus performs the method according to any one of claims 1 to 14, or the method according to any one of claims 15 to 19, or the method according to any one of claims 20 to 27, or the method according to claim 28.

31. The apparatus according to claim 30, further comprising an interface circuit, wherein the interface circuit is configured to receive a signal from another communication apparatus other than the communication apparatus and transmit the signal to the processor, or send a signal from the processor to another communication apparatus other than the communication apparatus.

32. A computer-readable storage medium, wherein the storage medium stores a computer program or instructions; and when the computer program or the instructions are executed by a communication apparatus, the method according to any one of claims 1 to 14 is implemented, or the method according to any one of claims 15 to 19 is implemented, or the method according to any one of claims 20 to 27 is implemented, or the method according to claim 28 is implemented.

33. A computer program product, comprising a computer program or instructions, wherein when the computer program or the instructions are run by an apparatus, the method according to any one of claims 1 to 14 is performed, or the method according to any one of claims 15 to 19 is performed, or the method according to any one of claims 20 to 27 is performed, or the method according to claim 28 is performed.

34. A processor, wherein the processor is coupled to a memory, and is configured to execute a computer program or instructions stored in the memory, so that a chip implements the method according to any one of claims 1 to 14, or the method according to any one of claims 15 to 19, or the method according to any one of claims 20 to 27, or the method according to claim 28.

FIG. 1a

EP 4 615 014 A1

FIG. 1b

FIG. 2

FIG. 3

FIG. 4

FIG. 5

FIG. 6

FIG. 7

FIG. 8

FIG. 9

FIG. 10

UE                Base station            LMF

1101: First reference signal and second reference signal

1101: Separately measure the first reference signal and the second reference signal, and determine a first measurement result of the first reference signal and a second measurement result of the second reference signal

1102: Determine whether a first indicator corresponding to the first measurement result meets a first condition

1103: Send all or a part of the second measurement result to the LMF based on a determining result, where all or the part of the second measurement result is used to determine location information of the UE based on an AI manner

FIG. 11

UE | Base station | LMF | Location requester

1201: Positioning request

1202: Determine a CFR fingerprint positioning mode based on the positioning request, and determine a first threshold based on the CFR fingerprint positioning mode, where the first threshold may be an SINR threshold

1203: First information indicating the SINR threshold

1204: Indicate the base station to send a PRS

1205: In a $1^{st}$ period, send a PRS 1

1206: Measure the PRS 1, determine a CFR 1, and report all of the CFR 1 to the LMF

1207: Determine location information 1 of the UE based on an AI model and the CFR 1, and store the CFR 1 and the location information 1

1209: In a $2^{nd}$ period, send a PRS 2

1208: Send a positioning result, including the location information 1 of the UE

1210: Measure the PRS 2, and determine a CFR 2 corresponding to the PRS 2

1211: Determine, based on the SINR threshold indicated by the LMF, an SINR corresponding to the CFR 1, and determine, based on a determining result, the CFR 2 to be reported to the LMF

1212: When the SINR corresponding to the CFR 1 is greater than or equal to the SINR threshold, report a part of the CFR 2 to the LMF

1213: Determine location information 2 of the UE based on the AI model, the CFR 1, the location information 1 of the UE, and the CFR 2

1214: Send a positioning result, including the location information 2 of the UE

FIG. 12

| UE | Base station | LMF | Location requester |
|---|---|---|---|

1301: Positioning request

1302: Determine a CFR fingerprint positioning mode based on the positioning request, and determine a first threshold based on the CFR fingerprint positioning mode, where the first threshold may be an SINR threshold

1303: First information indicating the SINR threshold

1304: Indicate the base station to send a PRS

1305: In a 1$^{st}$ period, send a PRS 1

1306: Measure the PRS 1, determine a CFR 1, and report all of the CFR 1 to the LMF

1309: An SINR corresponding to the CFR 1 is less than the SINR threshold indicated by the LMF

1307: Determine location information 1 of the UE based on an AI model and the CFR 1, and store the CFR 1 and the location information 1

1310: Request a PRS 2 with an enhanced configuration

1308: Send a positioning result, including the location information 1 of the UE

1311: In a 2$^{nd}$ period, send the PRS 2 with an enhanced configuration

1312: The UE measures the PRS 2, determines a CFR 2 corresponding to the PRS 2, and reports all or a part of the CFR 2 to the LMF

1313: Determine location information 2 of the UE based on the AI model, the CFR 1, the location information 1 of the UE, and the CFR 2

1314: Send a positioning result, including the location information 2 of the UE

FIG. 13

UE                                      Base station                                      LMF

1401: First reference signal and
second reference signal

1401: Separately measure the first
reference signal and the second reference
signal, and determine a first measurement
result of the first reference signal and a
second measurement result of the second
reference signal

1402: Determine whether a first indicator
corresponding to the first measurement
result meets a first condition

1403: Send all or a part of the second
measurement result to the LMF based on a
determining result, where all or the part of the
second measurement result is used to
determine location information of the UE based
on an AI manner

FIG. 14

UE                    Base station                    LMF            Location requester

1501: Positioning
request

1502: Determine a CIR fingerprint positioning
mode based on the positioning request, and
determine a first threshold based on the CIR
fingerprint positioning mode, where the first
threshold may be a first path power threshold

1503: First information indicating
the first path power threshold

1505: First
configuration
information for
configuring the UE to
send the 4-comb SRS

1504: Indicate the base station to
send a 4-comb SRS

1507: Measure the 4-comb SRS,
determine a CIR 1, and report all of the CIR
1 to the LMF

1506: 4-comb
SRS

1508: Determine location information 1 of the
UE based on an AI model and the CIR 1, and
store the CIR 1 and the location information 1

1509: Send a
positioning result,
including the location
information 1 of the
UE

1510: Determine, based on the indicated first
path power threshold, first path power
corresponding to the CIR 1, and determine a
frequency domain density of the SRS in current
positioning based on a determining result

1511: Second
configuration
information for
configuring a 2-comb
or 8-comb SRS

1512: Send
the 2-comb or 8-comb
SRS

1513: Measure the 2-comb or
8-comb SRS, determine a
CIR 2, and report all of the
CIR 2 to the LMF

1514: Determine location information 2 of the
UE based on the AI model, the CIR 1, the
location information 1 of the UE, and the CIR 2

1515: Send a
positioning result,
including the location
information 2 of the
UE

FIG. 15

UE          Base station                    LMF            Location requester

1601: Positioning
request

1602: Determine a CIR fingerprint positioning
mode based on the positioning request, and
determine a first threshold based on the CIR
fingerprint positioning mode, where the first
threshold may be a first path power threshold

1603: First information indicating
the first path power threshold

1605: First
configuration
information for
configuring the UE to
send the 4-comb SRS

1604: Indicate the base station
to send a 4-comb SRS

1606: 4-comb
SRS

1607: Measure the 4-comb SRS,
and report a CIR 1 of all measured antenna ports to
the LMF

1608: Determine location information 1 of the UE
based on an AI model and the CIR 1, and store
the CIR 1 and the location information 1

1609: Send a
positioning result,
including the location
information 1 of the
UE

1610: 4-comb SRS

1611: When first path power corresponding to the CIR 1
is less than the first path power threshold,
send a CIR 2 of some antenna ports to the LMF

1612: Determine location information 2 of the UE
based on the AI model, the CIR 1, the location
information 1 of the UE, and the CIR 2

1613: Send a
positioning result,
including the location
information 2 of the
UE

FIG. 16

Communication apparatus
1700

Processing unit 1710

Transceiver unit 1720

FIG. 17

Communication apparatus 1800

Processor 1810

Interface circuit
1820

Memory 1830

FIG. 18

## INTERNATIONAL SEARCH REPORT

| International application No. |
|---|
| **PCT/CN2023/132581** |

### A. CLASSIFICATION OF SUBJECT MATTER

H04W 4/029(2018.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI, 3GPP: 定位, 位置, 测量, 参考信号, 条件, 阈值, 门限, 部分, 全部, 完整, 结果, 减弱, 减少, 减小, 增强, 增大, 增加, 功率, 天线, 端口, 请求, 人工智能, position, location, measurement, reference signal, RS, condition, threshold, part, whole, total, result, decrease, increase, power, antenna, port, request, artificial intelligence, AI

### C. DOCUMENTS CONSIDERED TO BE RELEVANT

| Category* | Citation of document, with indication, where appropriate, of the relevant passages | Relevant to claim No. |
|---|---|---|
| Y | CN 103581996 A (HUAWEI TECHNOLOGIES CO., LTD.) 12 February 2014 (2014-02-12) claims 1-16, and description, paragraphs 0235-0314 and 0783 | 1-14, 20-27, 29-34 |
| Y | OPPO. "R1-2204020 On sub use cases and other aspects of AI/ML for positioning accuracy enhancement" *3GPP TSG RAN WG1 #109-e,* 20 May 2022 (2022-05-20), section 2 | 1-14, 20-27, 29-34 |
| X | WO 2022077392 A1 (HUAWEI TECHNOLOGIES CO., LTD.) 21 April 2022 (2022-04-21) description, page 27, line 25 to page 34, line 14, and page 50, lines 1-30 | 15-19, 28-34 |
| Y | WO 2022077392 A1 (HUAWEI TECHNOLOGIES CO., LTD.) 21 April 2022 (2022-04-21) description, page 27, line 25 to page 34, line 14, and page 50, lines 1-30 | 7-8, 10-13, 23-27 |
| X | CN 114208218 A (NOKIA SHANGHAI BELL CO., LTD. et al.) 18 March 2022 (2022-03-18) description, paragraphs 0048 and 0149-0157 | 28-34 |
| A | US 2013005356 A1 (NEC CORPORATION) 03 January 2013 (2013-01-03) entire document | 1-34 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 February 2024** | **21 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/132581**

| Patent document cited in search report | | | Publication date (day/month/year) | Patent family member(s) | | | Publication date (day/month/year) |
|---|---|---|---|---|---|---|---|
| CN | 103581996 | A | 12 February 2014 | WO | 2014012382 | A1 | 23 January 2014 |
| WO | 2022077392 | A1 | 21 April 2022 | CN | 116250294 | A | 09 June 2023 |
| CN | 114208218 | A | 18 March 2022 | WO | 2021026700 | A1 | 18 February 2021 |
| | | | | EP | 4011101 | A1 | 15 June 2022 |
| US | 2013005356 | A1 | 03 January 2013 | WO | 2011083802 | A1 | 14 July 2011 |
| | | | | JPWO | 2011083802 | A1 | 13 May 2013 |
| | | | | EP | 2523497 | A1 | 14 November 2012 |
| | | | | CN | 102687554 | A | 19 September 2012 |

Form PCT/ISA/210 (patent family annex) (July 2022)

**EP 4 615 014 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211462933